(19)

Europäisches
Patentamt
European
Patent Office
Office européen
des brevets

(11) EP 2 273 839 A1

(12) EUROPEAN PATENT APPLICATION

(43) Date of publication:
12.01.2011 Bulletin 2011/02

(51) Int Cl.:
H04W 72/14 (2009.01)          H04B 7/04 (2006.01)
H04L 5/00 (2006.01)

(21) Application number: 09008570.5

(22) Date of filing: 30.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: NTT DoCoMo, Inc.
Chiyoda-ku
Tokyo 100-6150 (JP)

(72) Inventors:
• Guthy, Christian
80803 München (DE)

• Utschick, Wolfgang
85051 Ingolstadt (DE)
• Dietl, Guido
80805 München (DE)

(74) Representative: Zinkler, Franz et al
Schoppe, Zimmermann, Stöckeler & Zinkler
Patentanwälte
Postfach 246
82043 Pullach bei München (DE)

Remarks:
Amended claims in accordance with Rule 137(2)
EPC.

(54) Apparatus and method for selecting a terminal

(57) An apparatus for selecting a terminal from a plurality of selectable terminals in a Multiple-Input Multiple-Output communication system for transmitting data from a base station to the terminal, comprises a calculator and a selector. The calculator calculates a MIMO-subchannel gain parameter for each terminal of the plurality of selectable terminals. Further, the calculator calculates a weighted transmission rate based on a calculated MIMO-subchannel gain parameter, on a power parameter and on a weighting multiplier. The weighting multiplier depends on a Quality of Service constrain of the Multiple-Input Multiple-Output communication system. The selector selects the terminal based on the calculated weighted transmission rate.

300

Calculating a MIMO-subchannel gain parameter for each terminal of the plurality of selectable terminals. — 310

Calculating a weighted transmission rate based on a calculated MIMO-subchannel gain parameter, on a power parameter and on a weighted multiplier, wherein the weighting multiplier depends on a Quality of Service constraint of the Multiple-Input Multiple-Ouput communication system. — 320

Selecting the terminal based on the calculated weighted transmission rate. — 330

FIG 3

EP 2 273 839 A1

## Description

Embodiments according to the invention relate to the field of multiuser Multiple-Input Multiple-Output (MIMO) communication systems and, in particular, an apparatus and a method for selecting a terminal from a plurality of selectable terminals in a Multiple-Input Multiple-Output communication system for transmitting data from a base station to the terminal.

For example, in a point to multi-point communication system, as for instance the downlink of a mobile communication system, the transmitter has the important task of assigning resources such as time, frequency and space components to the receivers under its coverage. If the transmitter knows the channel of each user or terminal, multiple users can be served at the same time and over the same frequency multiplexing them in space. In a multi-point to point communication system, as for example the uplink of a mobile communication system, this task has to be accomplished by the receiver. In the following the analysis may be restricted to the downlink, application to the uplink is straightforward. For this purpose multiple antennas at the base station or access point and the mobile users (terminals) are employed which leads to the well-known Multiple-Input Multiple-Output (MIMO) systems. Here a MIMO Orthogonal Frequency Division Multiplexing (OFDM) system with K users, C carriers and with $M_{Tx}$ antennas at the transmitter and $M_{Rx,k}$ antennas at the k-th receiver is considered. The k-th user's channel on the c-th carrier is described by the matrix

$$H_{k,c} \in \mathbb{C}^{M_{k,c} \cdot M_{Tx}}.$$

Assuming perfect knowledge of these matrices at the transmitter several Quality of Service (QoS) constrained optimization problems can be considered. These are the maximization of weighted sum rate under a power constraint and minimum and maximum rate constraints or relative rate constraints ("rate balancing"), where the users' rates must fulfill predefined ratios. Alternatively, one can consider the minimization of sum power required to fulfill minimum rate requirements. The optimum solutions to these problems have been found recently (see "C. Fung, W. Yu, and T. Lim. Multiantenna Downlink Precoding with Individual Rate Constraints: Power Minimization and User Ordering. In International Conference on Communication systems, 2004") for the power minimization, (see "J. Lee and N. Jindal. Symmetric Capacity of MIMO Downlink Channels. In IEEE International Symposium on Information Theory, 2006") for rate balancing and (see "G. Wunder and T. Michel. Minimum Rates Scheduling for MIMO-OFDM Broadcast Channels. In Proc. 9th IEEE Intern. Symp. on Spread Spectrum Techniques and Applications (ISSSTA 2006), Manaus, Brazil, August 2006") for the minimum rate constraints. All these algorithms work iteratively, where in each iteration a weighted sum rate maximization (see "H. Viswanathan, S. Venkatesan, and H. Huang. Downlink Capacity Evaluation of Cellular Networks With Known-Interference Cancellation. IEEE Journal on Selected Areas in Communications, 21(6):802-811, June 2003") must be solved. As this weighted sum rate maximization itself constitutes a numerically complex optimization problem, the optimum solutions to the problems listed above are computationally expensive.

For the maximization of sum rate solely with a sum power constraint the Successive Encoding Successive Allocation Method (SESAM) has been shown to achieve this aim quite well by simulations (see "P. Tejera, W. Utschick, G. Bauch, and J. A. Nossek. Subchannel Allocation in Multiuser Multiple-Input Multiple-Output Systems. IEEE Transactions on Information Theory, 52:4721-4733, Oct. 2006"). Furthermore, efficient methods for complexity reductions of this algorithm have been found in "C. Guthy, W. Utschick, J. A. Nossek, G. Dietl, and G. Bauch. Rate-Invariant User Preselection for Complexity Reduction in Multiuser MIMO Systems. In Proc. of IEEE Vehicular Technology Conference (VTC), September 2008". However, so far these methods could not be applied to the QoS extensions of SESAM for the rate balancing problem (see "P. Tejera, W. Utschick, G. Bauch, and J.A. Nossek. Rate Balancing in Multiuser MIMO OFDM Systems. Accepted for publication in IEEE Transactions on Communications, 2009") and the problem of maximizing sum rate under minimum rate requirements (see "C. Guthy, W. Utschick, G. Bauch, and J.A. Nossek. Sum Throughput Enhancements in Quality of Service Constrained Multiuser MIMO OFDM Systems. Wireless Personal Communications journal, special issue on "Serving and Managing Users in a Heterogeneous B3G Wireless World: Requirements, New Research Challenges, Emerging Solutions", 48(1):157-173, 2009"). Although these algorithms are far less complex than the optimum ones, they still exhibit a considerable amount of computational complexity. The latter algorithm furthermore requires a test whether the point of maximum sum rate lies within the feasible region or not. This test basically requires the execution of the sum rate maximizing SESAM before the actual QoS constrained algorithm can be executed. In order to circumvent the complexity related to nearly optimum practical implementations for Dirty Paper Coding (DPC), which these algorithms rely on, a purely linear precoding and allocation scheme has been developed with the Linear Successive Allocation (LISA) in "C. Guthy, W. Utschick, G. Dietl, and P. Tejera. Efficient Linear Successive Allocation for the MIMO Broadcast Channel. In Proc. of 42 and Asilomar Conference on Signals, Systems, and Computers, October 2008". In that case no QoS extensions are available so far.

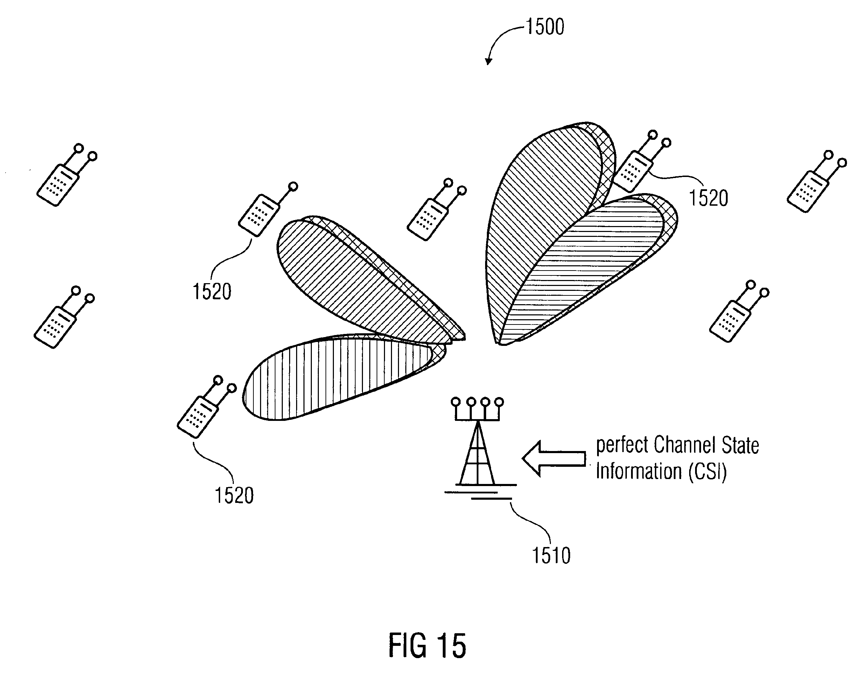

Fig. 15 shows a schematic illustration of a Multiple-Input Multiple-Output communication system 1500 comprising a base station 1510 and a plurality of terminals 1520 to be simultaneously addressed by the base station 1510. In this example, three terminals 1520 or users are simultaneously addressed, wherein one subchannel is allocated to each of two of the users 1520 and two subchannels are allocated to one of the users 1520. Each user has a Quality of Service (QoS) requirements, as for example, minimum transmission rates or maximum transmission rates. The objectives of the downlink may be maximizing the (weighted) sum rate under total power constraint or minimize transmit power required to fulfill the QoS requirements.

A solution for these problems may be found via iterative solutions of weighted sum rate maximization.

$$\max \sum \mu_k R_k$$

This may include a numerical search for weight solving the original problem. The optimum solution of one weighted sum rate maximization is already numerically complex and no sub-optimum heuristic solution is known so far.

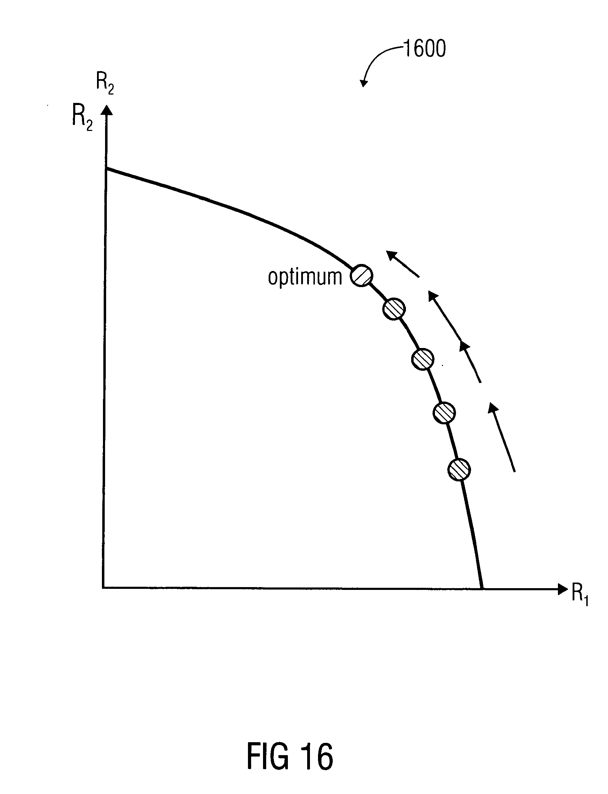

Fig. 16 shows a schematic illustration 1600 of an iterative solution of a weighted sum rate maximization for two users. The X-axis shows a transmission rate of a user R1 and the Y-axis shows a transmission rate of a user R2.

A known greedy approach is to use the SESAM or LISA principle to decompose the MIMO channel. In the initialization one subchannel is allocated to each user. A successive subchannel allocation is done so that the best improvement of the objective function is obtained with each allocation and the constraints are fulfilled. In this case, a numerically complex test is required.

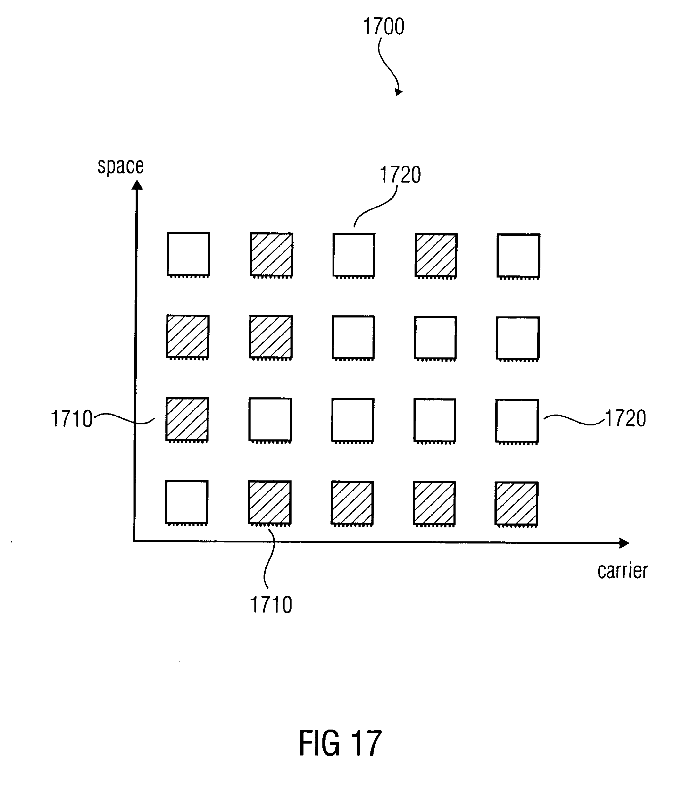

Fig. 17 shows a schematic illustration of a greedy approach for a successive subchannel allocation 1700 for two users. The X-axis shows different carriers (carrier frequencies) and the Y-axis shows different space subchannels. Each square symbolizes a different subchannel. In this example, the dark squares 1710 are allocated to one user and the bright squares 1720 are allocated to the other user.

It is the object of the present invention to provide a low complexity concept for selecting a terminal in a Multiple-Input Multiple-Output communication system for transmitting data from a base station to the terminal considering a Quality of Service constraint.

This object is solved by an apparatus according to claim 1,a method according to claim 13, or a computer program according to claim 16.

An embodiment of the invention provides an apparatus for selecting a terminal from a plurality of selectable terminals in a Multiple-Input Multiple-Output communication system for transmitting data from a base station to the terminal.

The apparatus comprises a calculator and a selector. The calculator is configured to calculate an MIMO-subchannel gain parameter for each terminal of the plurality of selectable terminals. Further, the calculator is configured to calculate a weighted transmission rate based on a calculated MIMO-subchannel gain parameter, on a power parameter and on a weighting multiplier. The weighting multiplier depends on the Quality of Service constraint of the Multiple-Input Multiple-Output communication system. The selector is configured to select the terminal based on the calculated weighted transmission rate.

Embodiments according to the present invention are based on the central idea that the selection of the terminal is based on a weighted transmission rate, wherein the Quality of Service constraint is considered by a weighting multiplier. The weighting multiplier may be multiplied with a transmission rate to obtain the weighted transmission rate. In this way, the transmission rate may be independent of the Quality of Service constraint and the complexity for calculating the weighted transmission rate may be significantly reduced. Independent in this case means, for example, that only the weighting multiplier may be changed, if the Quality of Service constraint is changed. Therefore the described concept may be easily adapted to different Quality of Service constraints.

Some embodiments according to the invention relate to a method for selecting a terminal from a plurality of selectable terminals in a Multiple-Input Multiple-Output communication system for transmitting data from a base station to the terminal. The method comprises calculating an MIMO-subchannel gain parameter for each terminal of the plurality of selectable terminals, calculating a weighted transmission rate and selecting the terminal based on the calculated weighted transmission rate. The weighted transmission rate is based on a calculated MIMO-subchannel gain parameter, on a power parameter and on a weighting multiplier. The weighting multiplier depends on the Quality of Service constraint of the Multiple-Input Multiple-Output communication system.

Some further embodiments according to the invention relate to an apparatus for allocating a plurality of subchannels to a plurality of terminals to be simultaneously addressed by a base station in a Multiple-Input Multiple-Output communication system for transmitting data from the base station to the plurality of terminals to be simultaneously addressed. The apparatus comprises an apparatus for selecting a terminal from a plurality of selectable terminals according to the described concept and a channel allocator. The plurality of selectable terminals comprises at least two of the terminals of the plurality of terminals to be simultaneously addressed. The channel allocator is configured to successively allocate exactly one subchannel to each terminal of the plurality of terminals to be simultaneously addressed. Further, the channel allocator is configured to allocate a further subchannel to one of the terminals of the plurality of selectable terminals selected by the apparatus for selecting a terminal, if a main constraint and the Quality of Service constraint are fulfilled.

Further embodiments according to the invention relate to a method for allocating a plurality of subchannels to a plurality of terminals to be simultaneously addressed by a base station in a Multiple-Input Multiple-Output communication system for transmitting data from the base station to the plurality of terminals to be simultaneously addressed. The method comprises allocating successively one subchannel to each terminal of the plurality of terminals to be simultaneously addressed, selecting a terminal of a plurality of selectable terminals according to the described concept and allocating a preferred subchannel of the selected terminal to the selected terminal, if a main constraint and the Quality of Service constraint is fulfilled. The plurality of selectable terminals comprises at least two of the terminals of the plurality of terminals to be simultaneously addressed and selecting a terminal comprises determining a preferred subchannel for each terminal of the plurality of selectable terminals.

Embodiments according to the invention will be detailed subsequently referring to the appended drawings, in which:

Fig. 1          is a block diagram of an apparatus for selecting a terminal;

Fig. 2          is a block diagram of an apparatus for selecting a terminal;

Fig. 3          is a flowchart of a method for selecting a terminal;

Fig. 4          is a block diagram of an apparatus for allocating a plurality of subchannels;

Fig. 5          is a flowchart of a method for allocating a plurality of subchannels;

Fig. 6          is a schematic illustration of a system model of carrier c;

Fig. 7          is a schematic illustration of an effective system model of carrier c after the application of SESAM or LISA;

Fig. 8          is a diagram comparing sum rates for the sum rate maximization under a minimum rate requirement;

Fig. 9          is a diagram comparing individual rates for the sum rate maximization under a minimum rate requirement;

Fig. 10         is a diagram comparing the computational complexity for the sum rate maximization with SESAM under minimum rate requirements;

Figs. 11a,11b   are diagrams comparing the computational complexity for the sum rate maximization with LISA under minimum rate requirements;

Fig. 12         is a schematic illustration of a spatial urban- microcell scenario;

Fig. 13         is a diagram comparing sum rates for the sum rate maximization under minimum rate requirements;

Fig. 14a        is a complexity analysis for the sum rate maximization with SESAM under minimum rate requirements;

Fig. 14b        is a complexity analysis for the sum rate maximization with LISA under minimum rate requirements;

Fig. 15         is a schematic illustration of a Multiple-Input Multiple-Output communication system;

Fig. 16         is a schematic illustration of an iterative solution of a weighted sum rate maximization for two users;

Fig. 17         is a schematic illustration of a greedy approach for a successive subchannel allocation for two users;

Fig. 18          is a schematic illustration of an indoor office scenario; and

Fig. 19          is a diagram comparing the computational complexity for the sum rate maximization with LISA under minimum rate requirements.

In the following, the same reference numerals are partly used for objects and functional units having the same or similar functional properties and the description thereof with regard to a figure shall apply also to other figures in order to reduce redundancy in the description of the embodiments.

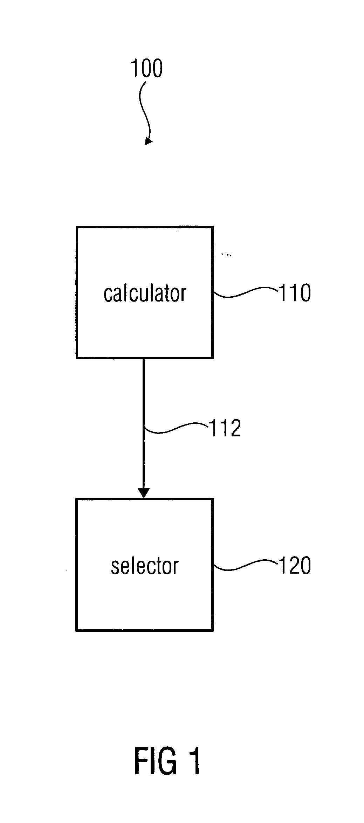

Fig. 1 shows a block diagram of an apparatus 100 for selecting a terminal from a plurality of selectable terminals in a Multiple-Input Multiple-Output communication system for transmitting data from a base station to the terminal according to an embodiment of the invention. The apparatus 100 comprises a calculator 110 connected to a selector 120. The calculator 110 calculates an MIMO-subchannel gain parameter for each terminal of the plurality of selectable terminals. Further, the calculator 110 calculates a weighted transmission rate 112 based on a calculated MIMO-subchannel gain parameter, on a power parameter and on a weighting multiplier. The weighting multiplier depends on a Quality of Service constraint of the Multiple-Input Multiple-Output communication system. The selector 120 selects the terminal based on the calculated weighted transmission rate 112.

Considering the Quality of Service constraint by a weighting multiplier may reduce the efforts, for example in terms of the computational complexity, for selecting a terminal under the Quality of Service constraint significantly. The weighted transmission rate 112 may be, for example, calculated by multiplying the weighting multiplier with a transmission rate, wherein the transmission rate may be independent from the Quality of Service constraint. The transmission rate may be based on the calculated MIMO-subchannel gain parameter and the power parameter. Independent in this case may mean, for example, that only the weighting multiplier may be changed, if the Quality of Service constraint is changed. Therefore the described concept may be easily adapted to different Quality of Service constraints. In this way, a low complexity concept for selecting a terminal from a plurality of selectable terminals considering a Quality of Service constraint is provided.

The MIMO-subchannel gain parameter may be, for example, a channel gain, a subchannel gain, the square of a channel gain or a subchannel gain, an eigenvalue of a channel matrix or a projected channel matrix, or another quantity related to a channel gain or subchannel gain. The power parameter may be, for example, the power of a channel or a subchannel, the power of a plurality of subchannels, or another quantity related to the power of a channel or a subchannel.

The plurality of selectable terminals may be, for example, a plurality of terminals, which should be simultaneously addressed by the base station, or a plurality of terminals preselected from a main plurality of terminals. The main plurality of terminals may then be itself a plurality of terminals to be simultaneously addressed by the base station. Simultaneously addressed by a base station means, for example, that the base station transmits data or data streams to these terminals during the same time interval.

The calculator 110 may calculate a weighted transmission rate 112 for each terminal of a plurality of selectable terminals based on the corresponding MIMO-subchannel gain parameter calculated for this terminal.

A terminal may also be called user and may be for example a mobile phone, a laptop or another communication device configured to receive date from a base station. A base station may be, for example, a base station of a communication system, an access point of a wireless local area network (WLAN) or also a mobile phone transmitting data to base stations and/or other mobile phones.

The same terminal may be selected more than once, because, for example, more than one subchannel may be allocated to the same terminal. For example, if more subchannels are available than terminals to be simultaneously addressed, data may be transmitted through more than one subchannel to the same terminal.

The calculator 110 and the selector 120 may be realized as specially designed hardware, or may be integrated in a processor or micro controller or may be a software product or a computer program configured to run on a computer or a micro controller.

For example, the MIMO communication system is a OFDM-MIMO System and a channel may be related to a carrier frequency and a subchannel may be related to a spatial subchannel of the carrier.

In some embodiments according to the invention, the weighting multiplier further depends on a main constraint of a plurality of already selected terminals of the Multiple-Input Multiple-Output communication system.

For example, the main constraint may be selecting a terminal of the plurality of selectable terminals providing a highest sum rate in combination with the plurality of already selected terminals, wherein the Quality of Service constraint may be selecting a terminal fulfilling a predefined terminal rate ratio compared to a reference terminal. In another example, the main constraint may be selecting a terminal of the plurality of selectable terminals providing a highest sum rate in combination with the plurality of already selected terminals, wherein the Quality of Service constraint may be selecting a terminal fulfilling a predefined minimum terminal rate or fulfilling a predefined maximum terminal rate. In a further example, the main constraint may be selecting a terminal of the plurality of selectable terminals providing a lowest sum power consumption in combination with the plurality of already selected terminals, wherein the Quality of Service constraint may be selecting a terminal fulfilling a predefined minimum terminal rate.

Additionally further constraints as, for example, an overall transmit power or a transmit power larger than or equal to zero for each terminal may be considered.

A terminal rate may be a transmission rate from the base station to one terminal. A sum rate may be an overall transmission rate from the base station to terminals being simultaneously addressed by the base station.

In some further embodiments according to the invention the calculator 110 determines a preferred subchannel of each terminal of the plurality of selectable terminals and the apparatus 100 allocates the preferred subchannel determined for the selected terminal to the selected terminal. In other words, during or before the calculation of the MIMO-subchannel gain parameter and the weighted transmission rate 112, the calculator 110 determines also a preferred subchannel for each terminal. Then, during or after selecting the terminal by the selector 120, the previously determined preferred subchannel of the selected terminal is allocated to the selected terminal. A preferred subchannel of a terminal may be a subchannel providing, for example, one of the highest or the highest transmission rate or signal-to-noise ratio of all available subchannels. An available subchannel may be, for example, a subchannel not already allocated to a terminal. In this way, for example, one of the best or the best available subchannel for the selected terminal is allocated to the selected terminal.

In further embodiments according to the invention, the apparatus for selecting a terminal successively selects a plurality of terminals from the plurality of selectable terminals for a time interval and an already selected terminal remains selected during the time interval. For a following time interval, the selection process may start from the beginning and a new plurality of terminals may be selected. In other words, for a selection of a plurality of terminals a greedy approach may be used. This may reduce the computational complexity for selecting the plurality of terminals compared with an iterative approach, since an already selected terminal remains selected. Testing a plurality of permutations of selected terminals may be avoided by using a greedy approach.

In some embodiments according to the invention, the weighting multiplier depends on a predetermined Lagrange multiplier and the predetermined Lagrange multiplier depends on the Quality of Service constraint.

By using Lagrange multipliers an optimization problem may be solved taking into account one or more constraints. In this way a main constraint and a Quality of Service constraint may be considered. For example, the main constraint may be translated to an objective function of the optimization problem and the Quality of Service constraint may be considered by a Lagrange multiplier or the Quality of Service constraint may be translated to an objective function of the optimization problem and the main constraint may be considered by using a Lagrange multiplier.

One possibility to further reduce the computational complexity may be, for example, using a predetermined Lagrange multiplier for the calculation of the weighted transmission rate 112 for the selection of the terminal. The predetermined Lagrange multiplier may be determined after a previous selection of a terminal. In other words, the calculator 110 may predetermine the Lagrange multiplier after the selection of the last terminal of the already selected terminals.

In still other word, a Lagrange multiplier may be determined after the selection of a terminal and may be used for the selection of the next terminal. In this way, the Lagrange multiplier for selecting the next terminal may be approximated by a Lagrange multiplier depending only on the already selected terminals and not on the terminals to be selected.

In some embodiments according to the invention a subchannel is allocated to each selected terminal of the plurality of selected terminals and the weighted transmission rate 112 depends on the already selected terminals. To further reduce the complexity for calculating the weighted transmission rate 112, an equal power parameter may be used for each subchannel allocated to an already selected terminal. In other words, the power parameter for a subchannel allocated to an already selected terminal may not depend on which terminals of the plurality of selectable terminals are already selected. In this way, the dependency of the weighted transmission rate 112 on the power parameter can be easily considered.

The complexity of the calculation of the weighted transmission rate 112 may be further reduced by using power parameters for subchannels allocated to already selected terminals, which are independent of the terminal to be selected during the calculation of the MIMO-subchannel gain parameter, the calculation of the weighted transmission rate 112 and/or the selection of the terminal.

In other words, the influence of the new selected terminals on the power parameter of the already selected terminals may be neglected during the selection of the new terminal.

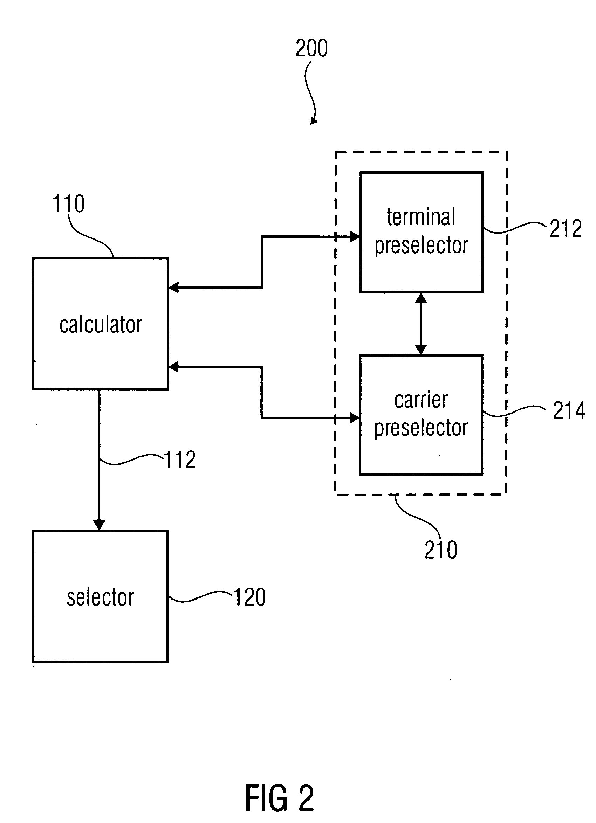

Fig. 2 shows a block diagram of an apparatus 200 for selecting a terminal according to an embodiment of the invention. The apparatus 200 corresponds to the apparatus shown in Fig. 1. Additionally, the apparatus 200 comprises a terminal preselector 212 and/or a carrier preselector 214 connected to the calculator 110 and connected to each other if both are existing. The apparatus 200 may select a plurality of terminals from the plurality of selectable terminals.

The terminal preselector 212 may preselect the plurality of selectable terminals from a main plurality of terminals. A terminal of the main plurality of terminals may be preselected, for example, if an upper bound of a maximum subchannel rate of the terminal to be preselected is equal or higher than a maximum lower bound of a transmission rate of the main plurality of terminals. In other words, a terminal may only be preselected if a predefined improvement, for example an increasing sum rate, is possible by selecting this terminal. So, terminals may be excluded with low computational efforts and the complexity may be further reduced.

The carrier preselector 214 may preselect a plurality of carriers from a main plurality of carriers for a terminal of the plurality of selectable terminals. A carrier of the main plurality of carriers may be preselected, for example, if an upper bound of a subchannel gain of the carrier to be preselected is equal or larger than a maximum lower bound of a subchannel gain of all already preselected terminals. In other words, a carrier may only be considered for the calculation of the MIMO-subchannel gain parameter or the calculation of the weighted transmission rate 112, if it may be possible to obtain a predefined improvement, for example an increasing sum rate, if the carrier is allocated to a terminal.

For example, the terminal preselector 212 preselects the plurality of selectable terminals and then the carrier preselector 214 preselects the plurality of carriers considering only the preselected plurality of selectable terminals.

The terminal preselector 212 and the carrier preselector 214 may be independent units, may be combined in one preselecting unit 210, as shown in Fig. 2, or may be a part of the calculator 110.

In some embodiments according to the invention, the calculator 110 is configured to calculate the MIMO-subchannel gain parameter for each terminal of the plurality of selectable terminals based on an upper bound of the MIMO-subchannel gain of each terminal. In other words, the MIMO-subchannel gain parameter may be approximated by the upper bound of the MIMO-subchannel gain. This may be possible, since the upper bound of the MIMO-subchannel gain may comprise the same behaviour as the MIMO-subchannel gain itself. For example, the upper bound of the MIMO-subchannel gain may comprise a maximum for the same terminal as the MIMO-subchannel gain itself.

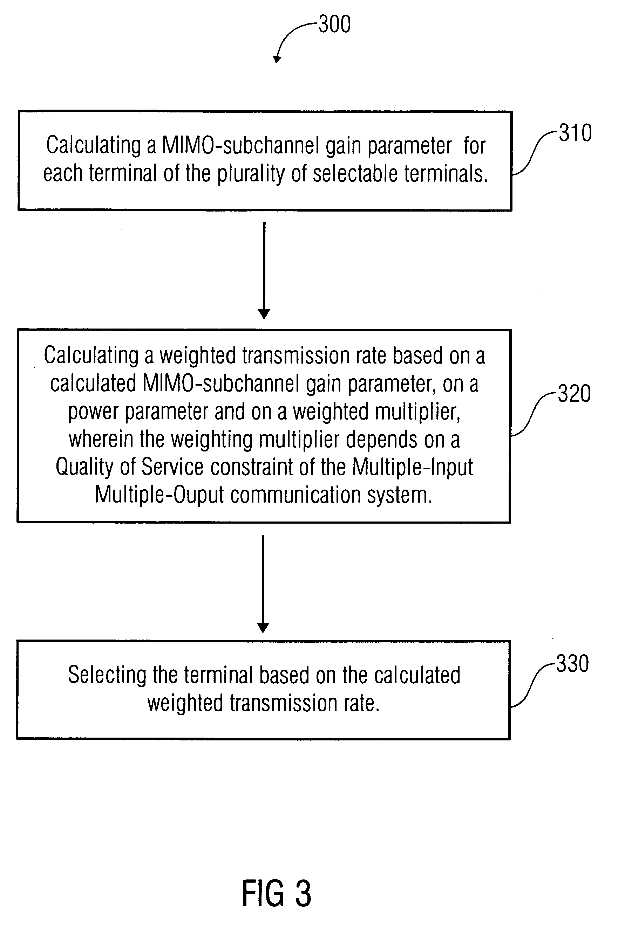

Fig. 3 shows a flowchart of a method 300 for selecting a terminal from a plurality of selectable terminals in a Multiple-Input Multiple-Output communication system for transmitting data from a base station to the terminal according to an embodiment of the invention. The method comprises calculating 310 a MIMO-subchannel gain parameter for each terminal of the plurality of selectable terminals, calculating 320 a weighted transmission rate and selecting 330 the terminal based on the calculated weighted transmission rate. The weighted transmission rate is based on the calculated MIMO-subchannel gain parameter, on a power parameter and on a weighting multiplier. The weighting multiplier depends on a Quality of Service constraints of the Multiple-Input Multiple-Output communication system.

The method may be realized as a computer program with a program code running on a computer or a micro controller. Alternatively, the method may be performed by an apparatus described before. The method may be extended by further steps according to the description of the embodiments above.

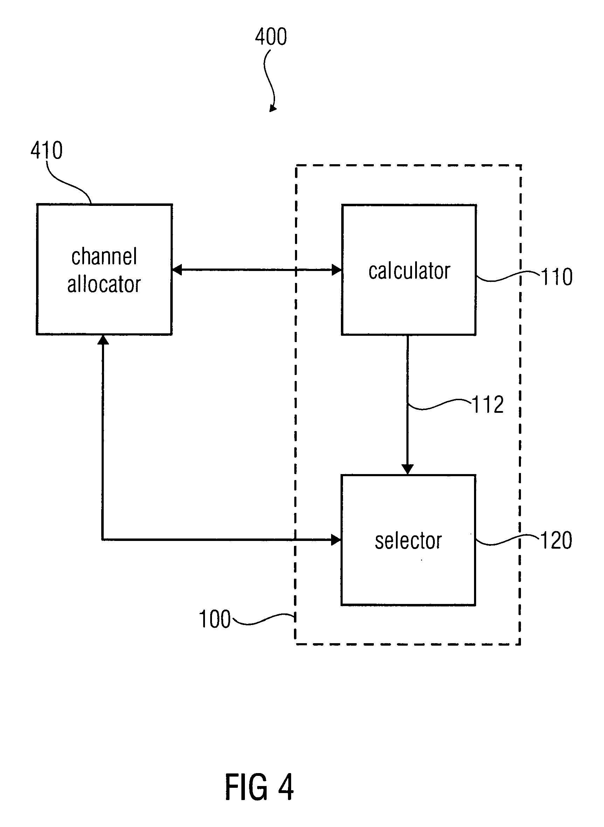

Fig. 4 shows a block diagram of an apparatus 400 for allocating a plurality of subchannels to a plurality of terminals to be simultaneously addressed by a base station in a Multiple-Input Multiple-Output communication system for transmitting data from the base station to the plurality of terminals to be simultaneously addressed according to an embodiment of the invention. The apparatus 400 comprises an apparatus 100 for selecting a terminal from a plurality of selectable terminals connected to a channel allocator 410. The apparatus 100 for selecting a terminal may select a terminal from the plurality of selectable terminals according to the concept described before. The plurality of selectable terminals may comprise at least two of the terminals of the plurality of terminals to be simultaneously addressed.

The channel allocator 410 allocates at least one subchannel to each terminal of the plurality of terminals to be simultaneously addressed. Then the channel allocator 410 allocates a further subchannel to one of the terminals of the plurality of selectable terminals, which is selected by the apparatus 100 for selecting a terminal, if a main constraint and the Quality of Service constraint is fulfilled.

The plurality of selectable terminals may be, for example, equal to the plurality of terminals to be simultaneously addressed or may be preselected from the plurality of terminals to be simultaneously addressed. Simultaneously addressed by a base station means, for example, that the base station transmits data to these terminals during the same time interval.

In other words, one channel is allocated to each terminal during an initialization phase. During this initialization phase one terminal after the other may be selected and a subchannel may be allocated to each terminal. The selection during this initialization phase may also be done by the apparatus 100 for selecting a terminal or according to another concept. If the apparatus 100 selects the terminals during the initialization phase, the plurality of selectable terminals for each selection may only consist of the terminals not already selected. Then, further subchannels are allocated to terminals. In this phase, all remaining available subchannels may be allocated to the same terminal, distributed to some terminals of the plurality of terminals to be simultaneously addressed or distributed to all terminals to be simultaneously addressed, depending on the main constraint and the Quality of Service constraint.

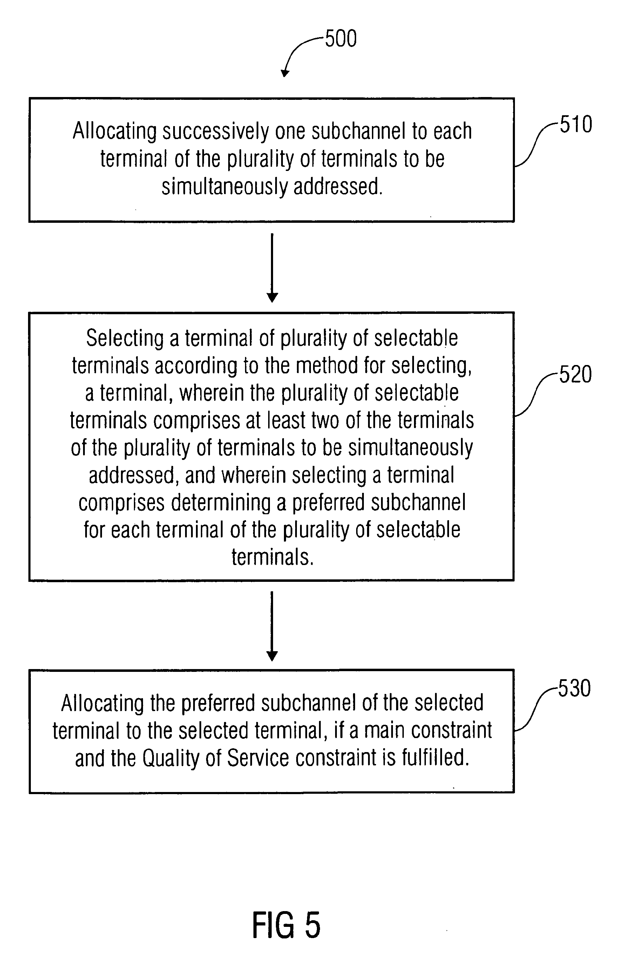

Fig. 5 shows a flowchart of a method 500 for allocating a plurality of subchannels to a plurality of terminals to be simultaneously addressed by a base station in a Multiple-Input Multiple-Output communication system for transmitting data from a base station to the plurality of terminals to be simultaneously addressed according to an embodiment of the invention. The method comprises allocating 510 at least one subchannel to each terminal of the plurality of terminals to be simultaneously addressed, selecting 520 a terminal of a plurality of selectable terminals and allocating 530 a preferred subchannel of the selected terminal to the selected terminal, if the main constraint and the quality of service constraint are fulfilled.

Selecting 520 the terminal of the plurality of selectable terminals is done according to the concept described above. The plurality of selectable terminals comprises at least two of the terminals of the plurality of terminals to be simultaneously addressed. Selecting 520 a terminal comprises further determining a preferred subchannel for each terminal of the plurality of selectable terminals.

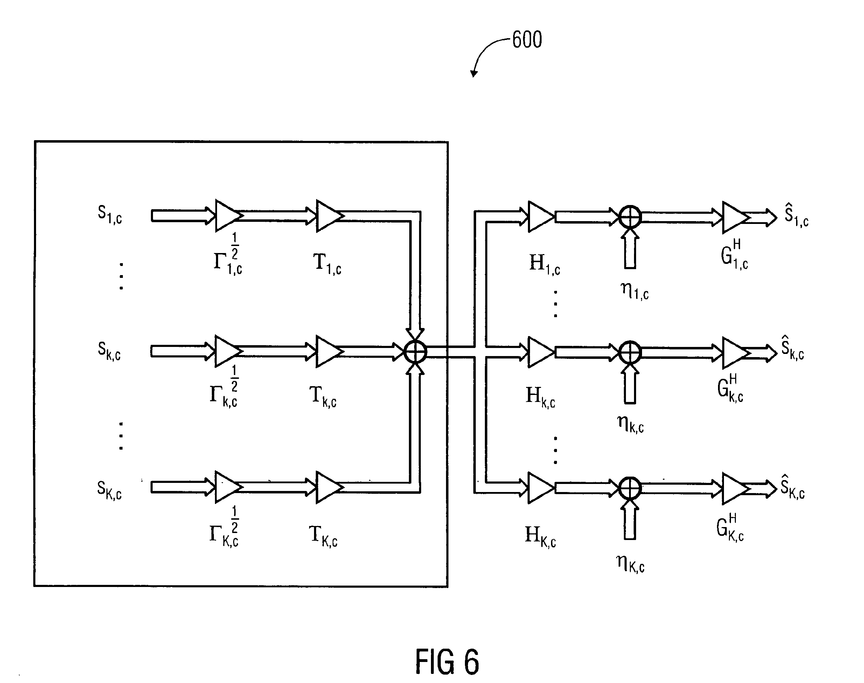

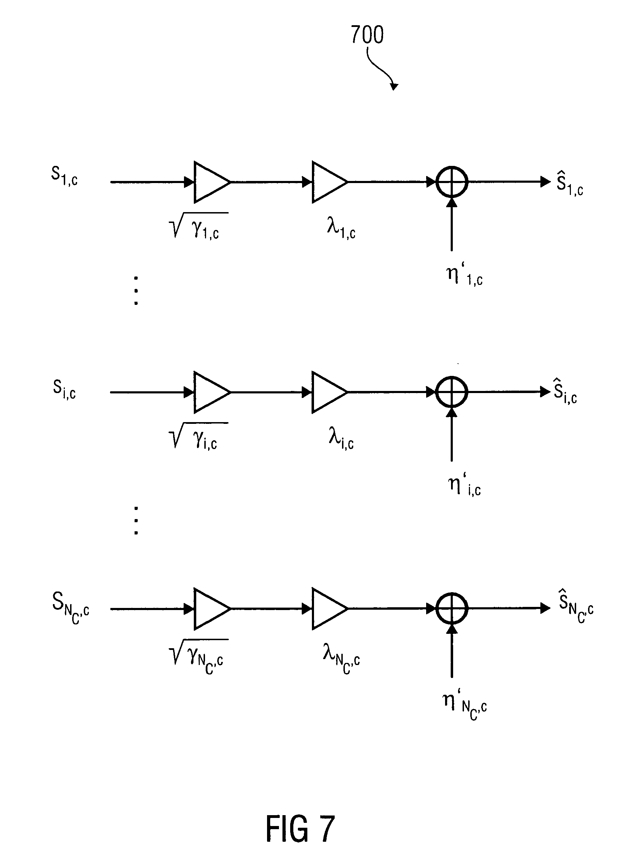

Some embodiments according to the invention relate to a MIMO OFDM broadcast channel with one base station or access point and K users. The base station may be equipped with $M_{Tx}$ antennas and each user or terminal may exhibit $M_{Rx,k}$ antennas. The number of carriers in the system is denoted by C. For example, the system model 600 of carrier c is depicted in Figure 6. The transmit precoder of user $k$ is split into a matrix $\mathbf{T}_{k,c} \in \mathbf{C}^{M_{Tx} \times d_{k,c}}$, which exhibits normalized columns, and a diagonal power loading matrix $\Gamma_{k,c} \in \mathbf{C}^{d_{k,c} \times d_{k,c}}$. $d_{k,c}$ denotes the number of data streams allocated to user $k$ on carrier c and $\mathbf{s}_{k,c} \in \mathbf{C}^{d_{k,c}}$ is the symbol transmitted by user $k$ on carrier $c$. As Gaussian codebooks are capacity achieving these codebooks may be used in the following and furthermore it is assumed that the symbols of different data streams are uncorrelated with each other (even if they belong to the same user) and have variance one, i.e. $\mathbf{s}_{k,c} \sim CN(\mathbf{0,I})$. Each user is assumed to know its channel matrices $\mathbf{H}_{k,c} \in \mathbf{C}^{M_{Rx,k} \times M_{Tx}}$ perfectly, and the base station has perfect knowledge of all channel matrices. $\eta_{k,c} \in \mathbf{C}^{M_{Rx,k}}$ denotes the additive noise experienced by user $k$, where in the following it is assumed $\eta_{k,c}$ to be circularly symmetric Gaussian with zero mean and unit variance, i.e. $\eta_{k,c} \sim CN(\mathbf{0,I})$. The noise signals of different users may be uncorrelated to each other and all noise signals are uncorrelated to the input signals $\mathbf{s}_{k,c}$. $\mathbf{G}_{k,c} \in \mathbf{C}^{M_{Rx,k} \times d_{k,c}}$ denotes the receive filter of user $k$ (terminal k) on carrier $c$. Additionally Fig. 7 shows an effective system model 700 of carrier c after application of SESAM or LISA.

With the transmit and receive filters determined according to SESAM or LISA the broadcast channel on each carrier may be decomposed into a system of effective interference-free scalar subchannels. With SESAM this complete interference suppression may be achieved by a combination of DPC and linear signal processing, whereas with LISA the complete interference can be suppressed completely by linear signal processing. $\pi(i) \in \{1,...,K\}$ denotes an encoding function on carrier c that maps an index $i$ to a user, i.e. user $\pi_c(i)$ is encoded at $i$-th place on carrier $c$. $\gamma_{i,c}$ denotes the power allocated to the $i$-th subchannel on carrier $c$ and $\lambda_{i,c}$ is the corresponding subchannel gain. The diagonal elements of the matrix $\Gamma_{k,c}$ are therefore given by the $\lambda_{j,c}$ with $\pi_c(j) = k$. The effective noise on that subchannel $\eta'_{ic}$, results from multiplying the noise $\eta_{\pi_c(i),c}$ with the receive filter $\mathbf{g}_{i,c}$ on that subchannel, i.e. $N_c$ denotes the number of allocated subchannels on carrier $c$. As in the following it may be constrained $\mathbf{g}_{i,c}$ to have norm one, $\eta'_{i,c}$ is Gaussian distributed with zero mean and unit variance. The channel gains $\lambda_{i,c}$ can be computed from the LQ-decomposition (e.g. "G. H. Golub and C. F. van Loan. Matrix Computations. The John Hopkins University Press, 1989") of the composite channel matrix

$$H_{\mathrm{comp},N_c,c} = \begin{bmatrix} \boldsymbol{g}_{1,c}^{\mathsf{H}} \boldsymbol{H}_{\pi_c(1)} \\ \vdots \\ \boldsymbol{g}_{N_C,c}^{\mathsf{H}} \boldsymbol{H}_{\pi_c(N_c)} \end{bmatrix} = \boldsymbol{L}_{N_c,c} \boldsymbol{Q}_{N_c,c}^{\mathsf{H}} \quad ,$$

where $\mathbf{L}_{N_c,c} \in \mathbf{C}^{N_c \times N_c}$ and $\mathbf{Q}_{N_c,c} \in \mathbf{C}^{M_{Tx} \times N_c}$ denote the lower triangular matrix and the orthonormal matrix from the LQ-decomposition, respectively. For SESAM the effective precoder $T_{eff,N_c,c,SESAM}$ on carrier $c$ is given by the matrix $\mathbf{Q}_{N_c,c}$, as the interference contained in the lower part of $\mathbf{L}_{N_c,c}$ can be cancelled by DPC. The actual precoders $\boldsymbol{T}_{k,c}$ may be obtained by extracting those columns of $\mathbf{T}_{eff,N_c,c,SESAM}$ that correspond to data streams allocated to the corresponding users $k$.

Consequently the SESAM subchannel gains $\lambda_{i,c,SESAM}$ can be found on the diagonal of $\mathbf{L}_{N_c,c}$, i.e.

$$\lambda_{i,c,SESAM} = (\mathbf{L}_{N_c,c})_{i,i} \quad ,$$

where $(\mathbf{L}_{N_c,c})_{i,i}$ denotes the element in the $i$-th row and the $i$-th column of $\mathbf{L}_{N_c,c}$. For LISA the interference must be cancelled completely by linear signal processing such that the effective precoder is given as

$$\mathbf{T}_{eff,N_c,c,LISA} = \mathbf{H}^{+}_{comp,N_c,c}\mathbf{\Lambda}_{N_c,c} \, ,$$

where $\Lambda_{N_C,c} = diag(\lambda_{1,c},...,\lambda_{N_C,c})$ is a diagonal matrix containing the inverse of the column norms of the pseudo-inverse $\mathbf{H}^{+}_{comp,N_c,c} = \mathbf{H}^{H}_{comp,N_c,c}(\mathbf{H}_{comp,N_c,c}\mathbf{H}^{H}_{comp,N_c,c})^{-1}$. That is because the columns of $\mathbf{T}_{eff,N_c,c,LISA}$ must have norm one, when, as in this system model, the power allocation is considered separately. As the product of the composite channel matrix and its pseudo-inverse is equal to the identity matrix, the elements of $\Lambda_c$ correspond to the subchannel gains such that

$$\lambda_{i,c,\text{LISA}} = \frac{1}{\sqrt{e_i^{\mathsf{T}} L_{N_c,c}^{-\mathsf{H}} L_{N_c,c}^{-1} e_i}} ,$$

where $e_i$ denotes the $i$-th canonical unit vector. In the following the index "SESAM" or "LISA" will be omitted when it is clear from the context to which channel gains it is refered.

Hence, the transmit filters may be implicitly given by the zero-forcing constraints of SESAM and LISA and can be uniquely determined for each carrier for a given user allocation $\pi_c(1),...,\pi_c(N_C)$, also called terminal selection or allocation of subchannels to terminals, and given receive filters $\mathbf{g}_{1,c},...,\mathbf{g}_{N_c,c}$. The power allocation can be done separately after all subchannel gains have been computed as described above.

In the following an nearly-optimum user allocation or selection of terminals, receive filters and power allocation for several QoS constrained optimization problems is described. An allocation set S = {$(\pi_1(1),1,1,\mathbf{g}_{1,1}),...,(\pi_C(N_C),N_C, C,\mathbf{g}_{N_C,C})$} may be defined, which consists of elements $(k,i,c,\mathbf{g}_{i,c})$.

Consequently, each element may characterize a subchannel by the user or terminal and the carrier it is allocated to, the place at which the corresponding data stream is encoded and the corresponding receive filter. Hence it may be aimed at finding the optimum S and the optimum powers $\gamma_{i,c}$, which will be subsumed in the vector

$$\boldsymbol{\gamma} = [\gamma_{1,1},...,\gamma_{N_c,c}]^{T} \in \mathfrak{R}_{+,0}^{\sum_c N_c}$$ in the following, that maximize a certain objective function $f_{obj}(\boldsymbol{S}, \gamma)$. As QoS con-

strained optimization problems are considered, furthermore a constraint set $C$ exists, i.e. $\boldsymbol{S}$ and $\gamma$ must be part of a constraint set $C$. In general it is therefore of interest solving

$$\{\mathcal{S},\boldsymbol{\gamma}\} = \underset{\{\hat{\mathcal{S}},\hat{\gamma}\}\in\mathcal{C}}{\operatorname{argmax}} f_{\text{obj}}(\hat{\mathcal{S}},\hat{\gamma}) \tag{1.1}$$

In the following three popular QoS constrained optimization problems are presented as examples. However, applicability of the proposed concept or algorithm is not limited to these problems. For example, any problem can be used as long as the resulting power allocation over the scalar subchannels is a concave optimization problem.

Some embodiments according to the invention relate to a rate balancing optimization problem. Rate balancing refers, for example, to the maximization of a weighted sum rate (main constraint) under a power constraint and relative rate requirements (QoS constraint). The ratios of the rates of each user k to the rate of an arbitrary reference user, denoted as "ref" in the following, must thereby fulfill predefined ratios $\rho_k$. Hence, it is

$$f_{obj}(S,\gamma) = \sum_{k=1}^{K} \mu_k R_k(S,\gamma) = \sum_{k=1}^{K} \mu_k \sum_{i,c\ with\ \pi_c(i)=k} \log_2(1+\gamma_{i,c}\lambda_{i,c}^2)$$

$$(1.2)$$

$$\mathcal{C} = \left\{ (\tilde{S},\tilde{\gamma}) \left| \tilde{\gamma}^\mathsf{T}\mathbf{1} \leq P_{\mathrm{Tx}}, \frac{R_k(\tilde{S},\tilde{\gamma})}{R_{\mathrm{ref}}(\tilde{S},\tilde{\gamma})} = \rho_k \forall k \neq \mathrm{ref}, g_{i,c}^\mathsf{H}g_{i,c} = 1, \forall i,c, \tilde{\gamma} \succeq 0 \right. \right\}$$

where $\mathbf{1}$ denotes the all-ones vector, $\mu_k$ are a priori given weights, and $\tilde{\gamma} \geq 0$ implies that all elements of the vector

$\tilde{\gamma}$ are greater than or equal to zero. If all weights $\mu_k$ are equal, Problem (1.2) corresponds to the maximization of the sum rate under relative rate requirements.

Some further embodiments according to the invention relate to a weighted sum rate maximization under minimum and maximum rate requirements optimization problem. In this problem each user's rate must lie between a minimum rate $R_{k,min}$ and a maximum rate $R_{k,max}$ (QoS constraint), where the total weighted sum rate should be maximized (main constraint) under a total power constraint. That may lead to the following objective function and constraint set.

$$f_{\mathrm{obj}}(\mathcal{S},\boldsymbol{\gamma}) = \sum_{k=1}^{K} \mu_k R_k(\mathcal{S},\boldsymbol{\gamma})$$

$$(1.3)$$

$$\mathcal{C} = \left\{ (\tilde{\mathcal{S}},\tilde{\gamma}) \left| \tilde{\gamma}^\mathsf{T}\mathbf{1} \leq P_{\mathrm{Tx}}, R_k(\tilde{\mathcal{S}},\tilde{\gamma}) \geq R_{k,\mathrm{min}}, \forall k, R_k(\tilde{\mathcal{S}},\tilde{\gamma}) \leq R_{k,\mathrm{max}}, \forall k, \right.\right.$$
$$\left.\left. g_{i,c}^\mathsf{H}g_{i,c} = 1, \forall i,c, \tilde{\gamma} \succeq 0 \right\}\right.$$

Note that in contrast to other problems it can happen that problem (1.3) is infeasible, i.e. the minimum rates cannot be satisfied with the given transmit power constraint. The maximum rate constraints $R_{k,max}$ can also be omitted. In this case $R_{k,max} = \infty$. In case additionally the minimum rate constraints are equal to zero, equation (1.3) reduces to a weighted sum rate maximization with a power constraint.

Some embodiments according to the invention relate to a power minimization under minimum rate requirements optimization problem. In this problem each user's rate must lie above a minimum rate $R_{k,min}$ (Qos constraint) and the power necessary to achieve this point should be minimized (main constraint), i.e.

$$f_{\mathrm{obj}}(\mathcal{S},\boldsymbol{\gamma}) = -\gamma^\mathsf{T}\mathbf{1}$$

$$(1.4)$$

$$\mathcal{C} = \left\{ (\tilde{\mathcal{S}},\tilde{\gamma}) \left| R_k(\tilde{\mathcal{S}},\tilde{\gamma}) \geq R_{k,\mathrm{min}}, \forall k, g_{i,c}^\mathsf{H}g_{i,c} = 1, \forall i,c, \tilde{\gamma} \succeq 0 \right.\right\}$$

In order to fit this problem into the framework of equation (1.1) the objective function may be the negative transmit power, as the minimization of the transmit power corresponds to the maximization of the negative transmit power.

Some further embodiments according to the invention relate to a successive allocation. Solving equation (1.1) may constitute a combinatorial and non-convex problem. As in the case of pure sum rate maximization it may therefore be proposed a sub-optimum successive determination of the set **S** and start with an empty set $\boldsymbol{S}^{(0)} = \{\}$ and enlarge the set in each step by one subset $(k,i,c,\boldsymbol{g}_{i,c})$. Furthermore once a subset is contained in **S**, it will not be removed in a later step (of the same time interval).

For example, at the beginning one subchannel may be allocated to each user. The initialization therefore consists of $K$ steps and in the $j$-th step, where $1 \leq j \leq K$, the corresponding optimization problem reads as

$$\max_{k \notin \mathcal{S}^{(j-1)}, \hat{c}, \boldsymbol{g}, \hat{\boldsymbol{\gamma}}^{(j)}} f_{\text{obj}}\left(\mathcal{S}^{(j-1)} \cup (k, N_{\hat{c}}^{(j-1)} + 1, \hat{c}, \boldsymbol{g}), \hat{\boldsymbol{\gamma}}^{(j)}\right),$$

$$\text{s.t. } (\mathcal{S}^{(j-1)} \cup (k, N_{\hat{c}}^{(j-1)} + 1, \hat{c}, \boldsymbol{g}), \hat{\boldsymbol{\gamma}}^{(j)}) \in \mathcal{C}' \qquad (1.5)$$

(s.t., subj ect to), where $S^{(j-1)}$ denotes the set of allocated users (also called already selected terminals), carriers, encoding places and receive filters determined during the previous $j$-1 steps. According to the idea of the successive allocation scheme those parameters may be kept fixed for the future steps, as this simplifies the resulting optimization problems drastically. The successive allocation furthermore may imply that the encoding place $i$ is a function of the selected carrier, as each newly allocated data stream is encoded after the already allocated data streams. That is why $i$ is replaced with $N_{\hat{c}}^{(j-1)} + 1$ in equation (1.5), where $N_{\hat{c}}^{(j-1)}$ denotes the number of data streams allocated on carrier $\hat{c}$ during the previous $j$-1 steps. The powers allocated to the subchannels in step $j$ are subsumed in the vector $\hat{\boldsymbol{\gamma}}^{(j)} \in \mathbf{C}^{\Sigma_c N_{\hat{c}}^{(j)}}$ The constraint set $C'$ contains only those constraints of $C$ that affects the already selected users, as the other constraints cannot be fulfilled when a user occupies no subchannel. Furthermore there is the constraint in equation (1.5) that a user allocated in a previous step must not allocated again before all other users have obtained at least one subchannel. Consequently the initialization is finished after $K$ steps, when each user occupies one subchannel.

Further, a successive determination of receive and transmit filters may be done. For example, after each user has received one subchannel the parameters of the newly allocated subchannel may be determined in each step such that the objective function becomes maximum and the constraints are fulfilled. Hence the resulting optimization problem in step $j$ can be written as

$$\max_{k, \hat{c}, \boldsymbol{g}} \max_{\hat{\boldsymbol{\gamma}}^{(j)}} f_{\text{obj}}\left(\mathcal{S}^{(j-1)} \cup (k, N_{\hat{c}}^{(j-1)} + 1, \hat{c}, \boldsymbol{g}), \hat{\boldsymbol{\gamma}}^{(j)}\right),$$

$$\text{s.t. } \left\{\mathcal{S}^{(j-1)} \cup (k, N_{\hat{c}}^{(j-1)} + 1, \hat{c}, \boldsymbol{g}), \hat{\boldsymbol{\gamma}}^{(j)}\right\} \in \mathcal{C}, \qquad (1.6)$$

where the set $\boldsymbol{S}^{(j-1)}$ is not optimized any more, i.e. it may be proceeded in a greedy manner as, for example, in "C. Guthy, W. Utschick, G. Dietl, and P. Tejera. Efficient Linear Successive Allocation for the MIMO Broadcast Channel. In Proc. of 42 nd Asilomar Conference on Signals, Systems" and "Computers, October 2008, G. Dimi'c and N.D. Sidoropoulos. On Downlink Beamforming with Greedy User Selection. IEEE Transactions on Signal Processing, 53(10):3857-3868, October 2005" for the pure sum rate maximization. Problem (1.6) constitutes a combinatorial optimization problem. That implies that the maximization over $\boldsymbol{g}$ and $\hat{\boldsymbol{\gamma}}^{(j)}$ must be conducted for every user and every carrier to find that carrier and that user to which the next data stream must be allocated such that the objective function becomes maximum.

It will be first focus on solving problem (1.6) with SESAM. The result of the inner maximization in equation (1.6) over $\hat{\boldsymbol{\gamma}}^{(j)}$ can be written as

$$g_{\text{obj}}\left(\lambda_{N_{\hat{c}}^{(j-1)}+1,\hat{c}}(\boldsymbol{g})\right) = \max_{\hat{\gamma}^{(j)}} f_{\text{obj}}\left(\mathcal{S}^{(j-1)} \cup (k, N_{\hat{c}}^{(j-1)}+1, \hat{c}, \boldsymbol{g}), \hat{\gamma}^{(j)}\right),$$

$$\text{s.t. } \left\{\mathcal{S}^{(j-1)} \cup (k, N_{\hat{c}}^{(j-1)}+1, \hat{c}, \boldsymbol{g}), \hat{\gamma}^{(j)}\right\} \in \mathcal{C}. \qquad (1.7)$$

With SESAM $g_{obj}\left(\lambda_{N_{\hat{c}}^{(j-1)}+1,\hat{c}}(\boldsymbol{g})\right)$ is a function only of the channel gain of the newly allocated subchannel denoted as $\lambda_{N_{\hat{c}}^{(j-1)}+1,\hat{c}}(\boldsymbol{g})$ (MIMO-subchannel gain parameter). Due to the fact that with SESAM a newly allocated subchannel does not reduce the channel gains of previously allocated subchannels, $\lambda_{N_{\hat{c}}^{(j-1)}+1,\hat{c}}(\boldsymbol{g})$ is the only variable in $g_{obj}$ that depends on the other optimization parameters $k$, $\hat{c}$ and $\boldsymbol{g}$. Additionally, $g_{obj}\left(\lambda_{N_{\hat{c}}^{(j-1)}+1,\hat{c}}(\boldsymbol{g})\right)$ is a monotonically increasing function in $\lambda_{N_{\hat{c}}^{(j-1)}+1,\hat{c}}(\boldsymbol{g})$ for a fixed user $k$. This is because it will always be optimum to allocate the strongest available subchannel to a fixed user $k$ as otherwise more power would be required to achieve the same performance. Consequently, for each user $k$, $g_{obj}\left(\lambda_{N_{c(k)}^{(j-1)}+1,c(k)}(\boldsymbol{g})\right)$ is maximized by the carrier $c(k)$ that exhibits the strongest channel gain and by that receive filter $\boldsymbol{g}_{N_{c(k)}^{(j-1)}+1,c(k)}$ that maximizes the corresponding channel gain, i.e. c(k)

$$\left\{c(k), \boldsymbol{g}_{N_{c(k)}^{(j-1)}+1,c(k)}\right\} = \operatorname*{argmax}_{\hat{c},\boldsymbol{g}} g_{\text{obj}}\left(\lambda_{N_{\hat{c}}^{(j-1)}+1,\hat{c}}(\boldsymbol{g})\right) = \operatorname*{argmax}_{\hat{c},\boldsymbol{g}} \lambda_{N_{\hat{c}}^{(j-1)}+1,\hat{c}}^2(\boldsymbol{g}) =$$

$$\operatorname*{argmax}_{\hat{c},\boldsymbol{g}} \boldsymbol{g}^{\text{H}} \boldsymbol{H}_{k,\hat{c}} \boldsymbol{P}_{N_{\hat{c}}^{(j-1)},\hat{c}} \boldsymbol{H}_{k,\hat{c}}^{\text{H}} \boldsymbol{g}, \quad \text{s.t. } \boldsymbol{g}^{\text{H}}\boldsymbol{g} = 1, \qquad (1.8)$$

where the projector $\boldsymbol{P}_{N_{\hat{c}}^{(j-1)},\hat{c}}$ is given by

$$\boldsymbol{P}_{N_{\hat{c}}^{(j-1)},\hat{c}} = \boldsymbol{I} - \boldsymbol{Q}_{N_{\hat{c}}^{(j-1)},\hat{c}} \boldsymbol{Q}_{N_{\hat{c}}^{(j-1)},\hat{c}}^{\text{H}}.$$

Hence, for finding the carrier and the encoding place that leads to the strongest improvement in the objective function for each user, it is not necessary to solve equation (1.7) explicitly for every carrier. Thus, instead of solving equation (1.7) $KC$ times for each allocation step, it may be suffices to solve this problem $K$ times for each of the K tuples $\left(c(k), \boldsymbol{g}_{N_{c(k)}^{(j-1)}+1,c(k)}\right)$ which may be determined according to equation (1.8). The maximization over $\boldsymbol{g}$ may be thereby achieved by choosing $\boldsymbol{g}_{N_{\hat{c}}^{(j-1)}+1,\hat{c}}$ to be the eigenvector corresponding to the principal eigenvector of the matrix

$\mathbf{H}_{k,\hat{c}}\mathbf{P}_{N_{\hat{c}}^{(j-1)},\hat{c}}\mathbf{H}_{k,\hat{c}}^{\mathsf{H}}$ . This is the same determination rule for the receive filters as with SESAM. Note that once the

possible receive filters $\mathbf{g}_{N_{\hat{c}}^{(j-1)}+1,\hat{c}}$ have been determined they can be stored and reused in future allocation steps, as long as no subchannel is allocated to the corresponding carrier $\hat{c}$. In other words it may be only necessary to compute new candidate receive filters for the carrier that has been selected in the previous step. $c(k)$ is then the carrier which

matrix $\mathbf{H}_{k,c(k)}\mathbf{P}_{N_{c(k)}^{(j-1)},c(k)}\mathbf{H}_{k,c(k)}^{\mathsf{H}}$ exhibits the maximum principal singular value amongst all carriers. Additionally, for the determination of $c(k),$ for example, the preselection method proposed in "C. Guthy, W. Utschick, J. A. Nossek, G. Dietl, and G. Bauch. Rate-Invariant User Preselection for Complexity Reduction in Multiuser MIMO Systems. In Proc. of IEEE Vehicular Technology Conference (VTC), September 2008", which is applied therein to preselect some users for SESAM without explicitly computing eigenvalues and projections can be applied as well. Hence, a certain carrier $\ell$ will not exhibit the strongest channel gain for a user $k$, if

$$\mathrm{tr}\left(\boldsymbol{H}_{k,\ell}\boldsymbol{P}_{N_{\ell}^{(j-1)},\ell}\boldsymbol{H}_{k,\ell}^{\mathsf{H}}\right) < \max_{\hat{c}}\frac{\mathrm{tr}\left(\boldsymbol{H}_{k,\hat{c}}\boldsymbol{P}_{N_{\hat{c}}^{(j-1)},\hat{c}}\boldsymbol{H}_{k,\hat{c}}^{\mathsf{H}}\right)}{m_{k,\hat{c}}} . \qquad (1.9)$$

$m_{k,\hat{c}}$ denotes an upper bound for the rank of the matrix $\mathbf{H}_{k,\hat{c}}\mathbf{P}_{N_{\hat{c}}^{(j-1)},\hat{c}}\mathbf{H}_{k,\hat{c}}^{\mathsf{H}}$ . The upper bound is equal to the maximum possible rank, i.e. $m_{k,\hat{c}} = M_{Rx,k}$ in case no data stream has been allocated so far to user $k$ on carrier $\hat{c}$. Otherwise for each already allocated data stream one is subtracted from that maximum rank to obtain $m_{k,\hat{c}}$. Equation (1.9) states that if the upper bound for the channel gain on a certain carrier $\ell$ is smaller than the maximum lower bound over all carriers, that carrier will not exhibit the strongest channel gain for user $k$ in a certain allocation step.

In summary in the $j$-th step with $j > K$ the characterizing parameters of the newly allocated subchannels may be determined according to

$$\left(\pi_c(i), i, c, \boldsymbol{g}_{i,c}\right) = \left(k_j, N_{c(k_j)}^{(j-1)}+1, c(k_j), \boldsymbol{g}_{N_{c(k_j)}^{(j-1)}+1,c(k_j)}\right)$$

$$\mathrm{with}\ k_j = \operatorname*{argmax}_{k} g_{\mathrm{obj}}\left(\lambda_{N_{c(k)}^{(j-1)}+1,c(k)}\left(\boldsymbol{g}_{N_{c(k)}^{(j-1)}+1,c(k)}\right)\right)$$

$c(k)$ and $\mathbf{g}_{N_{c(k)}^{(j-1)}+1,c(k)}$ may be determined according to equation (1.8). For the sum rate maximization with a power constraint, for example, only the user allocation can be conducted in parallel over all carriers, this may be no longer possible with QoS constraints as the allocation on the next subchannel may depend on the previous allocations of all carriers.
For LISA the identity in equation (1.8) cannot be stated anymore, i.e. the separation between selecting the best carrier for each user and then selecting the best user is no longer possible. That is because the gains of the already allocated subchannels on the considered carrier decrease with each new allocation due to the zero-forcing constraints. In addition all of those subchannel gains depend on the receive filter chosen for the newly allocated subchannel. That makes the problem of finding the optimum receive filter even more complicated. To circumvent this problem it is proposed to choose the receive filters heuristically. For the sum rate maximization with a power constraint only, it may be efficient to choose the same receive filters in the purely linear as well as in the non-linear case. Furthermore it can be seen with SESAM that the choice of the receive filters is independent of the QoS constraints. Therefore it is proposed to choose the receive filters in the linear case for QoS constrained optimization problems as with SESAM in equation (1.8), i.e.

$$g_{N_c^{(j-1)}+1,c} = \operatorname*{argmax}_{g} g^{\mathsf{H}} H_{k,c} P_{N_c^{(j-1)},c} H_{k,c}^{\mathsf{H}} g, \quad \text{s.t. } g^{\mathsf{H}} g = 1 \qquad (1.10)$$

However, despite this simplification the remaining optimization in equation (1.6) requires an exhaustive search over all carriers and users for the best data stream to be allocated next. The total complexity of the algorithm therefore amounts up to $O(M_{Tx}KC^2)$, as the resulting number of subchannels can be at most equal to $M_{Tx}C$.

The algorithm terminates, for example, when in one step the allocation of a new subchannel does not lead to an improvement in the objective function. With SESAM this may happen, when the number of subchannels on each carrier is equal to the number of transmit antennas, i.e. $N_c = M_{Tx}$, $\forall\, c$. In the linear case such a situation can already occur earlier. Anyway, the maximum number of data streams on each carrier is also upper bounded by the number of transmit antennas.

In case of the weighted sum rate maximization with minimum rate requirements and a sum power constraint is considered (c.f. problem (1.3)), it may be that the minimum rates cannot be satisfied with the given transmit power, i.e. problems (1.5) and (1.6) are infeasible, when only a few subchannels have been allocated to each user. As for example in "M. Codreanu, A. Tölli, M. Juntti, and M. Latvaaho. Joint Design of Tx-Rx Beamformers in MIMO Downlink Channel. IEEE Transactions on Signal Processing, 55:4639-4655, 2007", it is proposed to use the objective function and the constraint set from problem (1.4) at the beginning, i.e. the used transmit power $P_{used} = \mathbf{1}^{\mathsf{T}}\gamma_{(j)}$ quired to satisfy the minimum rate requirements $R_{k,min}$ should be minimized. As soon as $P_{used}$ falls below the transmit power constraint $P_{Tx}$, the original constraints can be used. In case $P_{used}$ is greater than $P_{Tx}$ when all spatial degrees of freedom are used up on each carrier, the problem is infeasible with SESAM or LISA. This can also be used as a feasibility test for the given optimization problem.

The proposed framework for determining the encoding order on each carrier and the corresponding receive filters is summarized in Algorithm 1.1.

$$\begin{aligned}
&\textbf{Start: } \mathcal{S} = \{\}, \mathcal{T} = \{\}, \boldsymbol{P}_{0,c} = \boldsymbol{I}, N_c = 0, \quad \forall c = 1, \dots, C\\
&\textbf{for } j = 1 \text{ to } K \textbf{ do}\\
&\quad \{\pi_c(N_c+1), c\} \leftarrow \text{USERSEL s.t. } \pi_c(N_c+1) \notin \mathcal{T}\\
&\quad \mathcal{T} = \mathcal{T} \cup \pi_c(N_c), N_c = N_c + 1\\
&\quad g_{N_c,c} = \operatorname*{argmax}_{g} g^{\mathsf{H}} H_{\pi_c(N_c),c} P_{N_c-1,c} H_{\pi_c(N_c),c}^{\mathsf{H}} g, \quad \text{s.t. } g^{\mathsf{H}} g = 1.\\
&\quad P_{N_c,c} = P_{N_c-1,c} - \frac{P_{N_c-1,c} H_{\pi_c(N_c),c}^{\mathsf{H}} g g^{\mathsf{H}} H_{\pi_c(N_c),c} P_{N_c-1,c}}{g^{\mathsf{H}} H_{\pi_c(N_c),c} P_{N_c-1,c} H_{\pi_c(N_c),c}^{\mathsf{H}} g}\\
&\quad \mathcal{S} = \mathcal{S} \cup (\pi_c(N_c), N_c, c, g_{N_c,c})\\
&\textbf{end for}\\
&\text{oldval} = \max_{\hat{\gamma}} f_{\text{obj}}(\mathcal{S}, \hat{\gamma}), \quad \text{s.t. } (\mathcal{S}, \hat{\gamma}) \in \mathcal{C}\\
&\textbf{repeat}\\
&\quad \{\pi_c(N_c+1), c\} \leftarrow \text{USERSEL}\\
&\quad N_c = N_c + 1\\
&\quad g_{N_c,c} = \operatorname*{argmax}_{g} g^{\mathsf{H}} H_{\pi_c(N_c),c} P_{N_c-1,c} H_{\pi_c(N_c),c}^{\mathsf{H}} g, \quad \text{s.t. } g^{\mathsf{H}} g = 1.\\
&\quad \text{newval} = \max_{\hat{\gamma}} f_{\text{obj}}(\mathcal{S} \cup (k, N_c, c, g_{N_c,c}), \hat{\gamma}), \quad \text{s.t. } \left(\mathcal{S} \cup (k, N_c, c, g_{N_c,c}), \hat{\gamma}\right) \in \mathcal{C}\\
&\textbf{if } \text{oldval} < \text{newval } \textbf{then}
\end{aligned}$$

$$\mathcal{S} = \mathcal{S} \cup \left(\pi_c(N_c), N_c, c, \boldsymbol{g}_{N_c,c}\right)$$

$$\boldsymbol{P}_{N_c,c} = \boldsymbol{P}_{N_c-1,c} - \frac{\boldsymbol{P}_{N_c-1,c}\boldsymbol{H}_{\pi_c(N_c),c}^{\mathsf{H}}\boldsymbol{g}\boldsymbol{g}^{\mathsf{H}}\boldsymbol{H}_{\pi_c(N_c),c}\boldsymbol{P}_{N_c-1,c}}{\boldsymbol{g}^{\mathsf{H}}\boldsymbol{H}_{\pi_c(N_c),c}\boldsymbol{P}_{N_c-1,c}\boldsymbol{H}_{\pi_c(N_c),c}^{\mathsf{H}}\boldsymbol{g}}$$

$\text{oldval} = \text{newval}$

**end if**

**until** $\text{oldval} > \text{newval}$

Compute precoders and power allocation from $\mathcal{S}$

Algorithm 1.1: General framework for solving QoS constrained problems with SESAM and LISA

The function USERSEL selects the user and the carrier the next data stream is allocated to. The corresponding receive filter is determined according to SESAM, as originally proposed, for example, in "P. Tejera,W. Utschick, G. Bauch, and J. A. Nossek. Subchannel Allocation in Multiuser Multiple-Input Multiple-Output Systems. IEEE Transactions on Information Theory, 52:4721-4733, Oct. 2006", which requires the update of the projector of the selected carrier in the algorithm. Note that for simplicity reasons the iteration index *j* for the projector matrices and the set *S* is omitted in the overview. With a given set S the transmit filters and powers are computed as described before. According to this algorithm an exhaustive search user selection is presented, where in each step the best possible data stream to be allocated next is found for sure. An overview of the exhaustive search for SESAM is given in Algorithm 1.2.

**Exhaustive User Selection for SESAM:**

**for** $k = 1$ **to** $K$ **do**

Carrier preselection: $\mathcal{S}_{\mathrm{C}}(k) = \left\{ c \left| \operatorname{tr}\left(\boldsymbol{H}_{k,c}\boldsymbol{P}_{N_c,c}\boldsymbol{H}_{k,c}^{\mathsf{H}}\right) \geq \max_{\hat{c}} \frac{\operatorname{tr}\left(\boldsymbol{H}_{k,\hat{c}}\boldsymbol{P}_{N_{\hat{c}},\hat{c}}\boldsymbol{H}_{k,\hat{c}}^{\mathsf{H}}\right)}{m_{k,\hat{c}}} \right. \right\}$

$c(k) = \operatorname*{argmax}_{\hat{c} \in \mathcal{S}_{\mathrm{C}}(k)} \max_{\boldsymbol{g}} \boldsymbol{g}^{\mathsf{H}}\boldsymbol{H}_{k,\hat{c}}\boldsymbol{P}_{N_{\hat{c}},\hat{c}}\boldsymbol{H}_{k,\hat{c}}^{\mathsf{H}}\boldsymbol{g}, \quad \text{s.t. } \boldsymbol{g}^{\mathsf{H}}\boldsymbol{g} = 1.$

$\boldsymbol{g}_{N_{c(k)}+1,c(k)} = \operatorname*{argmax}_{\boldsymbol{g}} \boldsymbol{g}^{\mathsf{H}}\boldsymbol{H}_{k,c(k)}\boldsymbol{P}_{N_{c(k)},c(k)}\boldsymbol{H}_{k,c(k)}^{\mathsf{H}}\boldsymbol{g}, \quad \text{s.t. } \boldsymbol{g}^{\mathsf{H}}\boldsymbol{g} = 1$

$a_k = \max_{\hat{\gamma}} f_{\text{obj}}\left(\mathcal{S} \cup (k, N_{c(k)}+1, c(k), \boldsymbol{g}_{N_{c(k)}+1,c(k)}), \hat{\gamma}\right),$

$\text{s.t. } \left(\mathcal{S} \cup (k, N_{c(k)}+1, c(k), \boldsymbol{g}_{N_{c(k)}+1,c(k)}), \hat{\gamma}\right) \in \mathcal{C}$

**end for**

$\pi_c(N_c + 1) = \operatorname*{argmax}_{k} a_k$

$c = c(\pi_c(N_c + 1))$

Algorithm 1.2: User selection through exhaustive search with SESAM

The carriers that are not excluded according to equation (1.9) for a certain user k are thereby subsumed in the set $S_c(k)$. For LISA the exhaustive user selection is described in Algorithm 1.3.

**Exhaustive User Selection for LISA:**
**for** $k = 1$ to $K$ **do**
   **for** $\tilde{c} = 1$ to $C$ **do**

$$g_{N_{\tilde{c}}+1,\tilde{c}} = \underset{g}{\arg\max}\, g^{\mathsf{H}} H_{k,\tilde{c}} P_{N_{\tilde{c}},\tilde{c}} H_{k,\tilde{c}}^{\mathsf{H}} g, \quad \text{s.t. } g^{\mathsf{H}} g = 1$$

$$a_{k,\tilde{c}} = \underset{\hat{\gamma}}{\max}\, f_{\text{obj}}\left(\mathcal{S} \cup (k, N_{\tilde{c}} + 1, \tilde{c}, g_{N_{\tilde{c}}+1,\tilde{c}})\right), \text{s.t. } \left(\mathcal{S} \cup (k, N_{\tilde{c}} + 1, \tilde{c}, g_{N_{\tilde{c}}+1,\tilde{c}}), \hat{\gamma}\right) \in \mathcal{C}$$

   **end for**
**end for**

$$\{\pi_c(N_c + 1), c\} = \underset{k,\hat{c}}{\arg\max}\, a_{k,\hat{c}}$$

Algorithm 1.3: User selection through exhaustive search with LISA

Some embodiments of the invention related to a concept providing reduced complexity user selection. The exhaustive user selection presented in the previous section still exhibits a considerable amount of computational complexity. This is because for each subchannel allocation the QoS constrained power optimaziation

$$\underset{\hat{\gamma}^{(j)}}{\max}\, f_{\text{obj}}\left(\mathcal{S}^{(j-1)} \cup (k, N_{\hat{c}}^{(j-1)} + 1, \hat{c}, g_{N_{\hat{c}}^{(j-1)}+1,\hat{c}}), \hat{\gamma}^{(j)}\right)$$

$$\text{s.t. }\left(\mathcal{S}^{(j-1)} \cup (k, N_{\hat{c}}^{(j-1)} + 1, \hat{c}, g_{N_{\hat{c}}^{(j-1)}+1,\hat{c}}), \hat{\gamma}^{(j)}\right) \in \mathcal{C}, \qquad (1.11)$$

has to be solved repeatedly. In the following it may not be optimized over the receive filters for simplicity reasons and the receive filters $g_{N_{\hat{c}}^{(j-1)}+1,\hat{c}}$ determined according to equation (1.10) may be applied. As it can be seen in the previous description, the optimization in equation (1.11) must be conducted $K$ times when SESAM is applied and $KC$ times for LISA in one selection step. Therefore a reduced complexity user allocation method is developed that approximates the exact solution of equation (1.11). This novel user allocation (selection of terminals) furthermore allows the application of the user preselection from "C. Guthy, W. Utschick, J. A. Nossek, G. Dietl, and G. Bauch. Rate-Invariant User Preselection for Complexity Reduction in Multiuser MIMO Systems. In Proc. of IEEE Vehicular Technology Conference (VTC), September 2008". The heuristic for SESAM is motivated in the following. The user selection may then be applied one-to-one to LISA or another concept.

For the QoS constrained optimization problems introduced before problem (1.11) is concave and its duality gap is zero. The latter implies that it can be solved via the minimization of the Lagrange dual function (see "S. Boyd and L. Vandenberghe. Convex optimization. Cambridge University Press, 2008"), i.e.

$$\underset{\theta,\nu,\eta}{\min}\, \underset{\hat{\gamma}^{(j)}}{\max}\, L\left(\mathcal{S}^{(j-1)} \cup (k, N_{\hat{c}}^{(j-1)} + 1, \hat{c}, g_{N_{\hat{c}}^{(j-1)}+1,\hat{c}}), \hat{\gamma}^{(j)}, \theta, \nu, \eta\right), \quad \text{s.t. } \theta, \nu \succeq 0.$$

leads to the same solution as maximizing (1.11). Consequently the optimum solution to the general problem (1.6) in step j can also be found according to

$$\underset{k,\hat{c}}{\max}\, \underset{\theta,\nu,\eta}{\min}\, \underset{\hat{\gamma}^{(j)}}{\max}\, L\left(\mathcal{S}^{(j-1)} \cup (k, N_{\hat{c}}^{(j-1)} + 1, \hat{c}, g_{N_{\hat{c}}^{(j-1)}+1,\hat{c}}), \hat{\gamma}^{(j)}, \theta, \nu, \eta\right), \quad \text{s.t. } \theta, \nu \succeq 0.$$

$$(1.12)$$

$L(\mathbf{S}^{(j-1)} \cup (k, N_{\hat{c}}^{(j-1)}+1, \hat{c}, \mathbf{g}_{N_{\hat{c}}^{(j-1)}+1,\hat{c}}), \hat{\boldsymbol{\gamma}}^{(j)}, \boldsymbol{\theta}, \mathbf{v}, \eta)$ denotes the Lagrange function of the optimization problem (1.11) and the maximum of this function over $\hat{\gamma}(j)$ leads to the Lagrange dual function. θ, v, and η are the Lagrange variables or Lagrange multipliers introduced as auxiliary variables for solving the concave optimization problem. Denoting the $k$-th user's rate as $R_k(\mathbf{S}^{(j-1)} \cup (k, N_{\hat{c}}^{(j-1)}+1, \hat{c}, \mathbf{g}_{N_{\hat{c}}^{(j-1)}+1,\hat{c}}), \hat{\boldsymbol{\gamma}}^{(j)})$, which may be for all optimization problems computed according to

$$R_k \left( \mathcal{S}^{(j-1)} \cup \left( k, N_{\hat{c}}^{(j-1)}+1, \hat{c}, \boldsymbol{g}_{N_{\hat{c}}^{(j-1)}+1,\hat{c}} \right), \hat{\gamma}^{(j)} \right) = \sum_{i,c \text{ with } \pi_c(i)=k} \log_2 \left( 1 + \hat{\gamma}_{i,c}^{(j)} \lambda_{i,c}^2 \right),$$

the Lagrange functions for the problems stated before may be given, for example, as follows:

For rate balancing:

$$L \left( \mathcal{S}^{(j-1)} \cup (k, N_{\hat{c}}^{(j-1)}+1, \hat{c}, \boldsymbol{g}_{N_{\hat{c}}^{(j-1)}+1,\hat{c}}), \hat{\gamma}^{(j)}, \boldsymbol{\theta}, \boldsymbol{\nu}, \eta \right) =$$

$$= \sum_{\ell=1}^{K} \mu_\ell R_\ell \left( \mathcal{S}^{(j-1)} \cup (k, N_{\hat{c}}^{(j-1)}+1, \hat{c}, \boldsymbol{g}_{N_{\hat{c}}^{(j-1)}+1,\hat{c}}), \hat{\gamma}^{(j)} \right) +$$

$$+ \sum_{\substack{\ell=1 \\ \ell \neq \text{ref}}}^{K} \theta_\ell \left[ R_\ell \left( \mathcal{S}^{(j-1)} \cup (k, N_{\hat{c}}^{(j-1)}+1, \hat{c}, \boldsymbol{g}_{N_{\hat{c}}^{(j-1)}+1,\hat{c}}), \hat{\gamma}^{(j)} \right) - \right.$$

$$\left. - \rho_\ell R_{\text{ref}} \left( \mathcal{S}^{(j-1)} \cup (k, N_{\hat{c}}^{(j-1)}+1, \hat{c}, \boldsymbol{g}_{N_{\hat{c}}^{(j-1)}+1,\hat{c}}), \hat{\gamma}^{(j)} \right) \right] +$$

$$+ \eta \left( P_{\text{Tx}} - \sum_{c=1}^{C} \sum_{i=1}^{N_c^{(j)}} \hat{\gamma}_{i,c}^{(j)} \right) + \sum_{c=1}^{C} \sum_{i=1}^{N_c^{(j)}} \nu_{i,c} \hat{\gamma}_{i,c}^{(j)} \qquad (1.13)$$

Therefore there are θ=$[\theta_1,...,\theta_{ref-1},\theta_{ref+1},...,\theta_K]^T$ nd v = $[v_{1,1},...,v_{N_c,C}]^T$. While θ determines how strongly the relative rate constraints must be considered for optimization, the latter Lagrange multipliers $v_{i,c}$ consider the constraint that all powers must not be smaller than zero, i.e. $\gamma_{i,c}^{(j)} \geq 0$. According to "S. Boyd and L. Vandenberghe. Convex Optimization. Cambridge University Press, 2008" they may be be chosen such that $v_{i,c}\gamma_{i,c}$ = 0, i.e. they are equal to zero, if $\gamma_{i,c}$ >0. The Lagrange multiplier η is associated with the sum power constraint. By rewriting equation (1.13)

$$L \left( \mathcal{S}^{(j-1)} \cup (k, N_{\hat{c}}^{(j-1)}+1, \hat{c}, \boldsymbol{g}_{N_{\hat{c}}^{(j-1)}+1,\hat{c}}), \hat{\gamma}^{(j)}, \boldsymbol{\theta}, \boldsymbol{\nu}, \eta \right) = \sum_{\substack{\ell=1 \\ \ell \neq \text{ref}}}^{K} (\mu_\ell + \theta_\ell) R_\ell +$$

$$+ \left( \mu_{\text{ref}} - \sum_{\substack{\ell=1 \\ \ell \neq \text{ref}}}^{K} \theta_\ell \rho_\ell \right) R_{\text{ref}} + \eta \left( P_{\text{Tx}} - \sum_{c=1}^{C} \sum_{i=1}^{N_c^{(j)}} \hat{\gamma}_{i,c}^{(j)} \right) + \sum_{c=1}^{C} \sum_{i=1}^{N_c^{(j)}} \nu_{i,c} \hat{\gamma}_{i,c}^{(j)},$$

is obtained, where the dependencies of the rates of the optimization variables are omitted for a better readability.

For the weighted sum rate maximization under minimum and maximum rate requirements:

$$L \left( \mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)}, \boldsymbol{\theta}, \boldsymbol{\nu}, \eta \right) =$$

$$= \sum_{\ell=1}^{K} \mu_\ell R_\ell \left( \mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)} \right) +$$

$$+ \sum_{\ell=1}^{K} \theta_\ell \left[ R_\ell \left( \mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)} \right) - R_{\ell,\min} \right] +$$

$$+ \sum_{\ell=1}^{K} \theta_{\ell+K} \left[ R_{\ell,\max} - R_\ell \left( \mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)} \right) \right] +$$

$$+ \eta \left( P_{\text{Tx}} - \sum_{c=1}^{C} \sum_{i=1}^{N_c^{(j)}} \hat{\gamma}_{i,c}^{(j)} \right) + \sum_{c=1}^{C} \sum_{i=1}^{N_c^{(j)}} \nu_{i,c} \hat{\gamma}_{i,c}^{(j)}$$

$$(1.14)$$

As in equation (1.13) the Lagrange multipliers $\nu = [\nu_{1,1}, ..., \nu_{N_C,C}]^T$ consider the constraints on the powers $\hat{\gamma}^{(j)}$. The Lagrange multipliers $\theta = [\theta_1, ..., \theta_{2K}]^T$ are introduced for the minimum and maximum rate constraints, where the indices 1 to $K$ correspond to the minimum rate requirements and $K+1$ to $2K$ to the maximum rate requirements. In case the maximum rate of a certain user 1 is infinity, the corresponding Lagrange multiplier is set to zero, i.e. $\theta_{\ell+K} = 0$. Correspondingly, the Lagrange multiplier $\theta_1 = 0$, if the minimum rate requirement of a user 1 is zero. Equation (1.14) reads in a simplified form as

$$L \left( \mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)}, \boldsymbol{\theta}, \boldsymbol{\nu}, \eta \right) = \sum_{\ell=1}^{K} (\mu_\ell + \theta_\ell - \theta_{\ell+K}) R_\ell +$$

$$+ \sum_{\ell=1}^{K} (\theta_{\ell+K} R_{\ell,\max} - \theta_\ell R_{\ell,\min}) + \eta \left( P_{\text{Tx}} - \sum_{c=1}^{C} \sum_{i=1}^{N_c^{(j)}} \hat{\gamma}_{i,c}^{(j)} \right) + \sum_{c=1}^{C} \sum_{i=1}^{N_c^{(j)}} \nu_{i,c} \hat{\gamma}_{i,c}^{(j)}.$$

For the power minimization under minimum rate requirements:

$$L\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)}, \boldsymbol{\theta}, \boldsymbol{\nu}\right) = -\sum_{c=1}^{C}\sum_{i=1}^{N_c^{(j)}} \hat{\gamma}_{i,c}^{(j)} +$$

$$+ \sum_{\ell=1}^{K} \theta_\ell \left[ R_\ell\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)}\right) - R_{\ell,\min} \right] + \sum_{c=1}^{C}\sum_{i=1}^{N_c^{(j)}} \nu_{i,c}\hat{\gamma}_{i,c}^{(j)}.$$

$$(1.15)$$

With this problem the Lagrange function does not require the Lagrange multiplier $\eta$, as there is no sum power constraint. The other Lagrange multipliers $\nu = [\nu_{1,1},..., \nu_{N_c,C}]^T$ and $\theta=[\theta_1,...,\theta_K]^T$ are required for the non-negative power and the minimum rate constraints. In a simplified version equation (1.15) reads as

$$L\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \hat{\boldsymbol{\gamma}}^{(j)}, \boldsymbol{\theta}, \boldsymbol{\nu}\right) = \sum_{\ell=1}^{K} \theta_\ell (R_\ell - R_{\ell,\min}) - \sum_{c=1}^{C}\sum_{i=1}^{N_c^{(j)}} (1-\nu_{i,c})\hat{\gamma}_{i,c}^{(j)}.$$

To avoid solving the optimum power allocation in equation (1.12) for every user and carrier to be tested the following simplifications may be made. These simplifications may only be used for the user allocation, i.e. the final power allocation $\gamma$ is determined by solving the convex optimization problem (1.12) exactly, for example, via the Karush-Kuhn-Tucker conditions (see "S. Boyd and L. Vandenberghe. Convex Optimization. Cambridge University Press, 2008"), likewise the test whether a newly allocated subchannel leads to an increase in the objective function may be done with the optimum power allocation after this subchannel has been allocated.

Some embodiments according to the invention relate to an equal power allocation. Instead of optimizing over $\hat{\gamma}^{(j)}$ (power parameter) an equal power allocation over all carriers may be assumed. The power on each carrier may be also equally distributed to its subchannels. Therefore the power parameter $\gamma_{i,c}$ may be set to

$$\hat{\gamma}_{i,c} = \tilde{\gamma}_{i,c} = \frac{P_{\text{Tx}}}{CN_{c,}^{(j)}}, \quad \forall i, c$$

and inserting it into equation (1.12) may lead to the following optimization problem

$$\max_{k,\hat{c}} \min_{\boldsymbol{\theta}} L\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \tilde{\boldsymbol{\gamma}}^{(j)}, \boldsymbol{\theta}\right), \quad \text{s.t. } \boldsymbol{\theta} \succeq \boldsymbol{0}.$$

$$(1.16)$$

As with the simplified powers $\tilde{\gamma}^{(j)}$ the sum power constraint is fulfilled with equality, i.e.

$P_{Tx} - \sum_{c=1}^{C}\sum_{i=1}^{N_c^{(j)}} \tilde{\gamma}_{i,c}^{(j)} = 0$ and all powers $\tilde{\gamma}_{i,c}$ are greater than zero, which implies that $\nu_{i,c} = 0$, $\forall\, i,c$. In this way, the simplified Lagrange function is independent of $\eta$ and $\nu$.

Some further embodiments according to the invention relate to an approximation of Lagrange multipliers. Equation (1.16) still depends on the Lagrange multipliers $\theta$. For the user selection it is proposed to approximate these multipliers by the optimum Lagrange multipliers from the previous allocation step, i.e.

$$\boldsymbol{\theta} = \boldsymbol{\theta}^{(j-1)} \, .$$

The $\theta^{(j-1)}$ are determined from the optimum power allocation problem (1.11), which may be computed after the set $\boldsymbol{S}^{(j-1)}$ has been fixed. Thus the following simplified optimization problem may be obtained

$$\max_{k,\hat{c}} L\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \tilde{\boldsymbol{\gamma}}^{(j)}, \boldsymbol{\theta}^{(j-1)}\right)$$

$$(1.17)$$

The only remaining terms in equation (1.17) that depend on the user and the carrier of the data stream to be allocated next are the users' rates such that equation (1.17) may be equivalent to (a maximum of a weighted transmission rate)

$$\max_{k,\hat{c}} \sum_{\ell=1}^{K} \hat{\mu}_\ell\left(\boldsymbol{\theta}^{(j-1)}\right) R_\ell\left(\mathcal{S}^{(j-1)} \cup (k, N_{\hat{c}}^{(j-1)} + 1, \hat{c}, \boldsymbol{g}_{N_{\hat{c}}^{(j-1)}+1,\hat{c}}), \tilde{\boldsymbol{\gamma}}^{(j)}\right) \, .$$

According to the Lagrange functions the $\hat{\mu}_\ell(\theta^{(j-1)})$, also called weighting multiplier, may be given by

$$\hat{\mu}_\ell\left(\boldsymbol{\theta}^{(j-1)}\right) \;=\; \begin{cases} \mu_\ell + \theta_\ell^{(j-1)}, & \ell \neq \text{ref} \\ \mu_\ell - \sum\limits_{\substack{n=1 \\ n \neq \ell}}^{K} \theta_n^{(j-1)} \rho_n, & \ell = \text{ref} \end{cases}$$

for rate balancing,

$$\hat{\mu}_\ell\left(\boldsymbol{\theta}^{(j-1)}\right) \;=\; \mu_\ell + \theta_\ell^{(j-1)} - \theta_{\ell+K}^{(j-1)},$$

for weighted sum rate with maximum and minimum rate constraints,

$$\hat{\mu}_\ell\left(\boldsymbol{\theta}^{(j-1)}\right) \;=\; \theta_\ell^{(j-1)},$$

for the power minimization.

Some embodiments accordinh to the invention relate to a consideration of newly allocated subchannel only (for calculating the weighted transmission rate). The effect, that the simplified power allocation $\tilde{\gamma}^{(j)}$ changes for all subchannels on the considered carrier, and in case of LISA, that all subchannel gains diminish on the considered carrier due to the new data stream allocation, may be neglected. Therefore maximizing the rate (weighted transmission rate) of the newly allocated subchannel only may be aimed, i.e.

$$\max_{k,\hat{c}} \hat{\mu}_k^{(j-1)} \log_2 \left( 1 + \frac{P_{\mathrm{Tx}}}{\left(N_{\hat{c}}^{(j-1)}+1\right)C} g_{N_{\hat{c}}^{(j-1)}+1,\hat{c}}^{\mathsf{H}} H_{k,\hat{c}} P_{N_{\hat{c}}^{(j-1)},\hat{c}} H_{k,\hat{c}}^{\mathsf{H}} g_{N_{\hat{c}}^{(j-1)}+1,\hat{c}} \right)$$

$$(1.18)$$

In the following this algorithm is denoted as low complexity user selection I (LCUS I), which may be summarized as Algorithm 1.4.

**Low Complexity User Selection (LCUS) I:**
**for** $k = 1$ to $K$ **do**

$$c(k) = \operatorname*{argmax}_{\hat{c}} \max_{g} g^{\mathsf{H}} H_{k,\hat{c}} P_{N_{\hat{c}},\hat{c}} H_{k,\hat{c}}^{\mathsf{H}} g, \quad \text{s.t. } g^{\mathsf{H}}g = 1.$$

$$a_k = \max_{\hat{c},g} g^{\mathsf{H}} H_{k,\hat{c}} P_{N_{\hat{c}},\hat{c}} H_{k,\hat{c}}^{\mathsf{H}} g, \quad \text{s.t. } g^{\mathsf{H}}g = 1.$$

**end for**

$$\pi_c(N_c + 1) = \operatorname*{argmax}_{k} \hat{\mu}_k^{(j-1)} \log_2 \left( 1 + \frac{P_{\mathrm{Tx}}}{C(N_{\hat{c}}+1)} a_k \right).$$

$$c = c(\pi_c(N_c + 1))$$

Algorithm 1.4: Low Complexity User Selection (LCUS) I

It constitutes a low complexity user selection for the general framework presented in Algorithm 1.1. For each user that carrier $c(k)$ is determined that exhibits the strongest channel gain amongst all carriers of that user. For this purpose it may be suffices to compare the projected eigenvalues, there may be no multiplications or logarithms required. With the strongest subchannel gain the estimated weighted sum rate can then be computed for each user, which may require in total only $K$ logarithms. Finally the user with the strongest (or one of the strongest) estimated weighted subchannel rate (weighted transmission rate) is selected.

In some embodiments according to the invention a terminal/user preselection and/or carrier preselection is performed. For example, for the maximization in equation (1.18) the user preselection from "C. Guthy, W. Utschick, J. A. Nossek, G. Dietl, and G. Bauch. Rate-Invariant User Preselection for Complexity Reduction in Multiuser MIMO Systems. In Proc. Of IEEE Vehicular Technology Conference (VTC), September 2008" can be applied. The bounds for

the eigenvalues $\lambda_{N_{\hat{c}}^{(j-1)}+1,\hat{c}}^2(k) = g_{N_{\hat{c}}^{(j-1)}+1,\hat{c}}^{\mathsf{H}} H_{k,\hat{c}} P_{N_{\hat{c}}^{(j-1)},\hat{c}} H_{k,\hat{c}}^{\mathsf{H}} g_{N_{\hat{c}}^{(j-1)}+1,\hat{c}}$  (MIMO-subchannel gain parameter) are given, for example, by "Gene H. Golub and Charles F. van Loan. Matrix Computations. The John Hopkins University Press, 1989".

$$\frac{tr(\mathbf{H}_{k,\hat{c}} \mathbf{P}_{N_{\hat{c}}^{(j-1)},\hat{c}} \mathbf{H}_{k,\hat{c}}^{\mathbf{H}})}{m_{k,\hat{c}}} \leq \lambda_{N_{\hat{c}}^{(j-1)}+1,\hat{c}}^2(k) \leq tr(\mathbf{H}_{k,\hat{c}} \mathbf{P}_{N_{\hat{c}}^{(j-1)},\hat{c}} \mathbf{H}_{k,\hat{c}}^{\mathbf{H}})$$

$$(1.18b)$$

$m_{k,\hat{c}}$ denotes as in equation (1.9) an upper bound for the rank of $\mathbf{H}_{k,\hat{c}} \mathbf{P}_{N_{\hat{c}}^{(j-1)},\hat{c}} \mathbf{H}_{k,\hat{c}}^{\mathbf{H}}$ . With these bounds on the eigenvalues for every user and every carrier a lower and an upper bound for the estimated rate in equation (1.18) on the newly allocated subchannel can be computed. Users and carriers, which upper bound is lower than the maximum lower bound over all users and carriers, could then be excluded. As for each computation of such a bound two multiplications and one logarithm are required, which introduces a considerable amount of extra computational complexity, it is propose to split the preselection into two phases, a user preselection and a carrier preselection. The user preselection may be realized by a terminal preselector and the carrier preselection may be realized by a carrier preselector.

In the first step users n with

$$\hat{\mu}_n^{(j-1)} \log_2 \left( 1 + \max_{\hat{c}} \frac{P_{\text{Tx}}}{C \left( N_{\hat{c}}^{(j-1)} + 1 \right)} \operatorname{tr} \left( \boldsymbol{H}_{n,\hat{c}} \boldsymbol{P}_{N_{\hat{c}}^{(j-1)},\hat{c}} \boldsymbol{H}_{n,\hat{c}}^{\mathsf{H}} \right) \right)$$

$$< \max_k \hat{\mu}_k^{(j-1)} \log_2 \left( 1 + \max_{\hat{c}} \frac{P_{\text{Tx}} \operatorname{tr} \left( \boldsymbol{H}_{k,\hat{c}} \boldsymbol{P}_{N_{\hat{c}}^{(j-1)},\hat{c}} \boldsymbol{H}_{k,\hat{c}}^{\mathsf{H}} \right)}{C \left( N_{\hat{c}}^{(j-1)} + 1 \right) m_{k,\hat{c}}} \right) \qquad (1.19)$$

may be excluded. By applying equation (1.19) only $K$ instead of $KC$ logarithms are required for the testing. Therefore only users (terminals) which upper bound for the maximum estimated subchannel rate is higher than the maximum lower bound of all users may be considered. Note that the traces of matrices $\mathbf{H}_{k,\hat{c}} \mathbf{P}_{N_{\hat{c}}^{(J-1)},\hat{c}} \mathbf{H}_{k,\hat{c}}^{\mathbf{H}}$ do not have to be computed for each user and each carrier in each allocation step. That is because after the allocation of one data stream only the projection matrices on the selected carrier change, i.e. for example only $K$ new traces of matrices need to be computed after each allocation.

For the users not excluded in the previous step now those carriers $\ell$ can be excluded which upper bound on the eigenvalue is smaller than the maximum lower bound of that user over all carriers. These excluded carriers $\ell$ are determined the same way as in (1.9), i.e.

$$\operatorname{tr} \left( \boldsymbol{H}_{k,\ell} \boldsymbol{P}_{N_\ell^{(j-1)},\ell} \boldsymbol{H}_{k,\ell}^{\mathsf{H}} \right) < \max_{\hat{c}} \frac{\operatorname{tr} \left( \boldsymbol{H}_{k,\hat{c}} \boldsymbol{P}_{N_{\hat{c}}^{(j-1)},\hat{c}} \boldsymbol{H}_{k,\hat{c}}^{\mathsf{H}} \right)}{m_{k,\hat{c}}}.$$

Finally, for all users and carriers that have not been excluded the eigenvalues may be computed. Note that most of the eigenvalues have already been computed in a previous step, as only the projection matrix on the selected carrier may have changed compared to the previous allocation step. The final selection may require again only K logarithms as, for example, at first for each remaining user the strongest eigenvalue may be determined and only this eigenvalue is inserted in the objective function of equation (1.18). When the user preselection is applied as described above, the corresponding user selection may be called low complexity user selection II (LCUS II). It may exhibit the same performance as LCUS I at a possibly lower computational complexity and is summarized in Algorithm 1.5.

**Low Complexity User Selection (LCUS) II:**

User Preselection: $\mathcal{S}_{\mathrm{U}} = \left\{ k \,\middle|\, \hat{\mu}_k^{(j-1)} \log_2 \left( 1 + \max_{\hat{c}} \frac{P_{\mathrm{Tx}}}{C(N_{\hat{c}}+1)} \operatorname{tr}\left( \boldsymbol{H}_{k,\hat{c}} \boldsymbol{P}_{N_{\hat{c}},\hat{c}} \boldsymbol{H}_{k,\hat{c}}^{\mathsf{H}} \right) \right) \right.$

$\left. \geq \max_n \hat{\mu}_n^{(j-1)} \log_2 \left( 1 + \max_{\hat{c}} \frac{P_{\mathrm{Tx}}}{C(N_{\hat{c}}+1)m_{n,\hat{c}}} \operatorname{tr}\left( \boldsymbol{H}_{n,\hat{c}} \boldsymbol{P}_{N_{\hat{c}},\hat{c}} \boldsymbol{H}_{n,\hat{c}}^{\mathsf{H}} \right) \right) \right\}$

**for all** $k \in \mathcal{S}_{\mathrm{U}}$ **do**

Carrier preselection: $\mathcal{S}_{\mathrm{C}}(k) = \left\{ \tilde{c} \,\middle|\, \operatorname{tr}\left( \boldsymbol{H}_{k,\tilde{c}} \boldsymbol{P}_{N_{\tilde{c}},\tilde{c}} \boldsymbol{H}_{k,\tilde{c}}^{\mathsf{H}} \right) \geq \max_{\hat{c}} \frac{\operatorname{tr}\left( \boldsymbol{H}_{k,\hat{c}} \boldsymbol{P}_{N_{\hat{c}},\hat{c}} \boldsymbol{H}_{k,\hat{c}}^{\mathsf{H}} \right)}{m_{k,\hat{c}}} \right\}$

$c(k) = \underset{\hat{c} \in \mathcal{S}_{\mathrm{C}}(k)}{\operatorname{argmax}} \max_{\boldsymbol{g}} \boldsymbol{g}^{\mathsf{H}} \boldsymbol{H}_{k,\hat{c}} \boldsymbol{P}_{N_{\hat{c}},\hat{c}} \boldsymbol{H}_{k,\hat{c}}^{\mathsf{H}} \boldsymbol{g}, \quad \text{s.t. } \boldsymbol{g}^{\mathsf{H}} \boldsymbol{g} = 1.$

$a_k = \max_{\boldsymbol{g},\hat{c}} \boldsymbol{g}^{\mathsf{H}} \boldsymbol{H}_{k,\hat{c}} \boldsymbol{P}_{N_{\hat{c}},\hat{c}} \boldsymbol{H}_{k,\hat{c}}^{\mathsf{H}} \boldsymbol{g}, \quad \text{s.t. } \boldsymbol{g}^{\mathsf{H}} \boldsymbol{g} = 1.$

**end for**

$\pi_c(N_c + 1) = \underset{k}{\operatorname{argmax}} \, \mu_k^{(j-1)} \log_2 \left( 1 + \frac{P_{\mathrm{Tx}}}{C(N_{\hat{c}}+1)} a_k \right).$

$c = c(\pi_c(N_c + 1))$

Algorithm 1.5: Low Complexity User Selection (LCUS) II

To further reduce the computational complexity, for example, the upper bounds for the principal eigenvalues may be used as estimations for the eigenvalues and the user selection may be conducted with these upper bounds. That may lead to the following allocation rule

$$\left( \tilde{\pi}_c(i), \tilde{i}, \tilde{c}, \tilde{\boldsymbol{g}}_{\tilde{i},\tilde{c}} \right) = \left( k_j, N_{\tilde{c}}^{(j-1)} + 1, \tilde{c}, \tilde{\boldsymbol{g}}_{N_{\tilde{c}}^{(j-1)}+1,\tilde{c}} \right)$$

with

$$\{k_j, \tilde{c}\} = \underset{k,\hat{c}}{\operatorname{argmax}} \, \hat{\mu}_k^{(j-1)} \log_2 \left( 1 + \frac{P_{\mathrm{Tx}}}{\left( N_{\hat{c}}^{(j-1)} + 1 \right) C} \operatorname{tr}\left( \boldsymbol{H}_{k,\hat{c}} \boldsymbol{P}_{N_{\hat{c}}^{(j-1)},\hat{c}} \boldsymbol{H}_{k,\hat{c}}^{\mathsf{H}} \right) \right),$$

and

$$\tilde{\boldsymbol{g}}_{N_{\tilde{c}}^{(j-1)}+1,\tilde{c}} = \underset{\boldsymbol{g}}{\operatorname{argmax}} \, \boldsymbol{g}^{\mathsf{H}} \boldsymbol{H}_{\tilde{\pi}_{\tilde{c}}(\tilde{i}),\tilde{c}} \boldsymbol{P}_{N_{\tilde{c}}^{(j-1)},\tilde{c}} \boldsymbol{H}_{\tilde{\pi}_{\tilde{c}}(\tilde{i}),\tilde{c}}^{\mathsf{H}} \boldsymbol{g}, \quad \text{s.t. } \boldsymbol{g}^{\mathsf{H}} \boldsymbol{g} = 1.$$

Hence, the computation of a principal eigenvalue and the corresponding eigenvector may only be required for the selected user. Instead of the upper bound for the principal eigenvalues, one can alternatively use the lower bounds from equation (1.18b) for the user preselection.

$$\left( \tilde{\pi}_c(i), \tilde{i}, \tilde{c}, \tilde{\boldsymbol{g}}_{\tilde{i},\tilde{c}} \right) = \left( k_j, N_{\tilde{c}}^{(j-1)} + 1, \tilde{c}, \tilde{\boldsymbol{g}}_{N_{\tilde{c}}^{(j-1)}+1,\tilde{c}} \right)$$

$$with\{k_j, \tilde{c}\} = \arg\max_{k,\hat{c}} \hat{\mu}_k^{(j-1)} \log_2\left(1 + \frac{P_{Tx}}{(N_{\hat{c}}^{(j-1)}+1)C} \frac{tr(\mathbf{H}_{k,\hat{c}}\mathbf{P}_{N_{\hat{c}}^{(j-1)},\hat{c}}\mathbf{H}_{k,\hat{c}}^{\mathsf{H}})}{m_{k,\hat{c}}}\right)$$

$$\text{and } \tilde{g}_{N_{\hat{c}}^{(j-1)}+1,\tilde{c}} = \underset{g}{\arg\max}\, g^{\mathsf{H}} H_{\tilde{\pi}_{\tilde{c}}(\tilde{i}),\tilde{c}} P_{N_{\hat{c}}^{(j-1)},\tilde{c}} H_{\tilde{\pi}_{\tilde{c}}(\tilde{i}),\tilde{c}}^{\mathsf{H}} g, \quad \text{s.t. } g^{\mathsf{H}}g = 1.$$

Note that this simplified user selection can lead to a different parameter set (different selected terminals) than LCUS I/II. This user selection for Algorithm 1.1 may be denoted as low complexity user selection III (LCUS III) in the following and may be summarized in Algorithm 1.6

**Low Complexity User Selection (LCUS) III:**
**for** $k = 1$ to $K$ **do**
$\quad c(k) = \underset{\hat{c}}{\arg\max}\, \mathrm{tr}\left(H_{k,\hat{c}} P_{N_{\hat{c}},\hat{c}} H_{k,\hat{c}}^{\mathsf{H}}\right)$
$\quad a_k = \underset{\hat{c}}{\max}\, \mathrm{tr}\left(H_{k,\hat{c}} P_{N_{\hat{c}},\hat{c}} H_{k,\hat{c}}^{\mathsf{H}}\right)$
**end for**
$\pi_c(N_c + 1) = \underset{k}{\arg\max}\, \hat{\mu}_k^{(j-1)} \log_2\left(1 + \frac{P_{Tx}}{C(N_{c(k)}+1)} a_k\right).$
$c = c(\pi_c(N_c + 1))$
$\qquad\qquad$ Algorithm 1.6: Low Complexity User Selection (LCUS) III

If the lower bounds are used for the preselection

$$a_k = \underset{\hat{c}}{\max} \frac{tr(\mathbf{H}_{k,\hat{c}}\mathbf{P}_{N_{\hat{c}}^{(j-1)},\hat{c}}\mathbf{H}_{k,\hat{c}}^{\mathsf{H}})}{m_{k,\hat{c}}}.$$

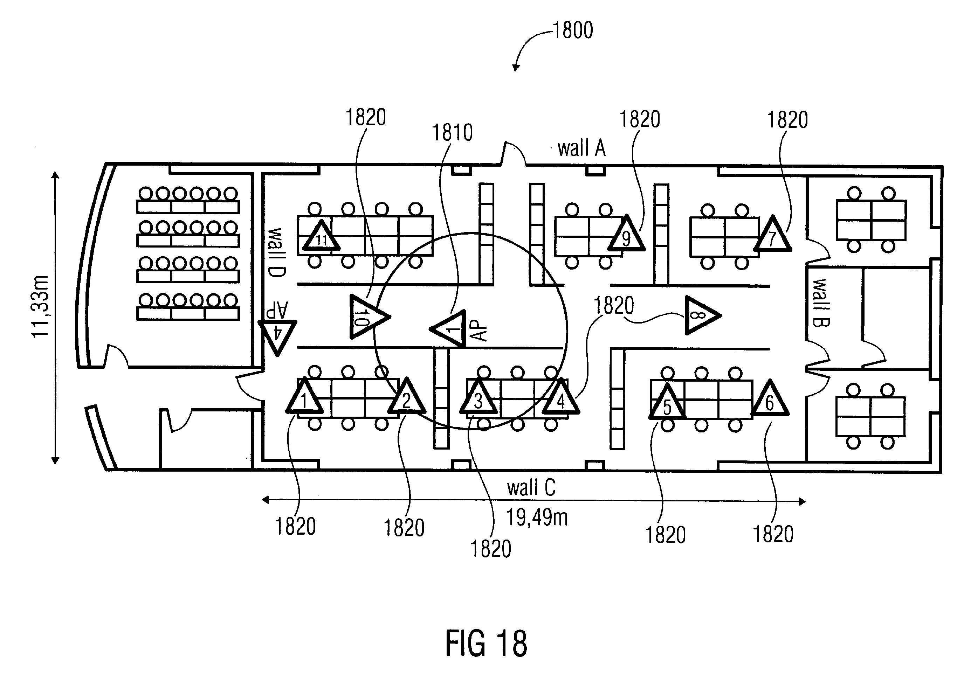

Some embodiments according to the invention relate to simulation results with measured channels. A large indoor office scenario is considered and the measurements have been carried out at Aalborg University, for details see "G. Bauch, J. Bach Andersen, C. Guthy,M. Herdin, J. Nielsen, P. Tejera,W. Utschick, and J.A. Nossek. Multiuser MIMO Channel Measurements and Performance in a Large Office Environment. In Proc. of IEEE Wireless Communications and Networking Conference (WCNC),2007" (and references therein). Fig. 18 shows a schematic illustration of the indoor office scenario 1800 with an access point 1810 with four antennas and ten users 1820 with two antennas each. In this scenario 1800 an OFDM system with 1024 subcarriers and 100 megahertz bandwidth is realized. One access point (AP 1) has been active in the considered scenario, where it has been equipped with $M_{Tx} = 4$ antennas arranged in a Uniform Linear Array (ULA) with half wavelength spacing between the antennas. Each user has been equipped with $M_{Rx,k} = 2$ antennas and for user 10 no measured channels have been available. An OFDM system with C = 1024 subcarrier has been employed and the bandwidth has been equal to 100 MHz.

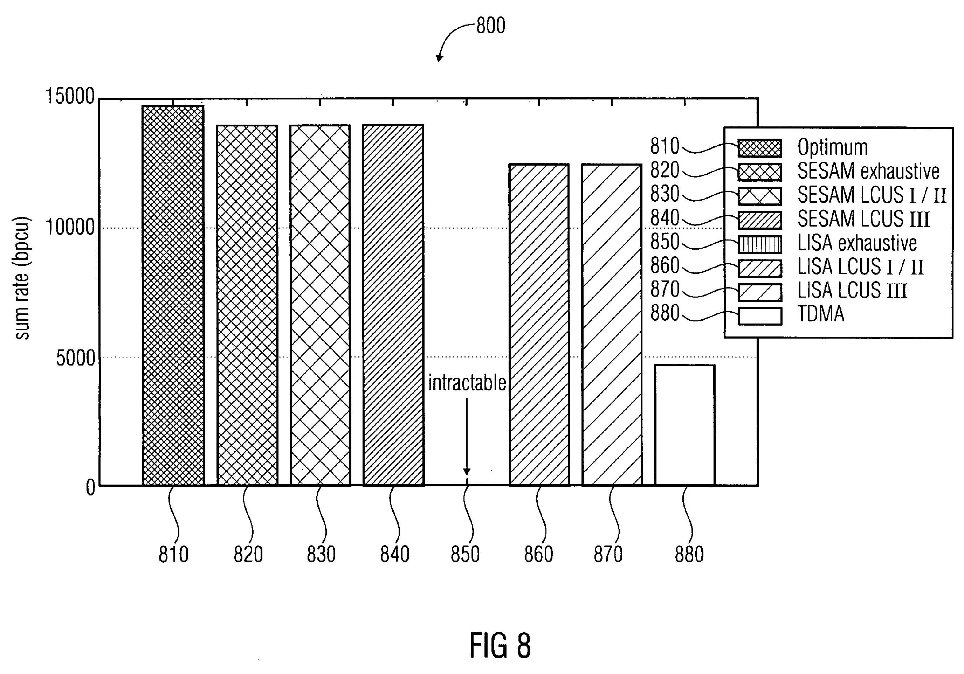

Figure 8 shows the sum rates 800 in bits per channel use (bpcu) for the problem of maximizing sum rate with equal weights and under minimum rate requirements for the SESAM exhaustive algorithm 820, the Sesam LCUS I/II algorithm 830, the SESAM LCUS III algorithm 840, the LISA exhaustive algorithm 850, the LISA LCUS I/II algorithm 860, the LISA LCUS III algorithm 870, a TDMA algorithm 880 and for comparison the optimum sum rate 810. For the odd users except user 11 the minimum rates have been set to 0.1024 kbpcu, which corresponds to 0.1 bpcu per subcarrier, i.e. R1, min = R3,min = .... = R9,min = 0.1024 kbitpcu. For the remaining users the minimum rate requirements where twice as high, i.e.R2,min = R4,min = ..... = R8,min = R11, min = 0.2048 kbitpcu. There have been no maximum rate requirements. For the optimum sum rate the algorithm from "G. Wunder and T. Michel. Minimum Rates Scheduling for MIMO-OFDM Broadcast Channels. In Proc. 9th IEEE Intern. Symp. on Spread Spectrum Techniques and Applications (ISSSTA 2006), Manaus, Brazil, August 2006" has been used. "Exhaustive" 820, 850 refers to the algorithm described before, where in each step all candidate users and carriers are tested. While for SESAM this search is still tractable as described before, for LISA this is no longer the case in a system with 1024 subcarrier. Therefore the corresponding column 850 is left empty in Figure 8. SESAM with this exhaustive search 820 achieves 95% of the optimum sum rate 810 at drastically reduced complexity. The simplifications avoiding this search lead to almost no performance losses. LCUS I and LCUS II 830 show the same performance, as the only difference between these methods is the application of the user preselection, which does not lead to any performance losses. Compared to SESAM the LISA QoS extensions loose a little bit. However LCUS I with LISA 860 is still able to achieve 84.5% of the optimum sum rate 810. As the rate region achievable with Orthogonal Frequency Division Multiple Access (OFDMA) lies only slightly above the Time Division Multiple Access 880 (TDMA) region, but solving QoS constrained problems with OFDMA would require an iterative application of the weighted sum rate maximization for OFDMA from (see "K. Seong, M. Mohseni, and J. M. Cioffi. Optimal Resource Allocation for OFDMA Downlink Systems. In *Proc. of International Symposium on Information Theory (ISIT),* July 2006"), the computationally simpler concept of TDMA is used as competitive algorithm. With TDMA the users are separated by time. Each user receives a fraction of the coherence time, which is the time interval within the channel can be assumed to be constant. During this fraction of the coherence time this user receives all system resources such as transmit power and subcarrier. For the considered problem of maximizing sum rate under minimum rate requirements that means that the length of the time interval for each user is determined such that its minimum rate requirement can be satisfied. The remaining time is then given to that user that can achieve the maximum rate amongst all users when it obtains all system resources.

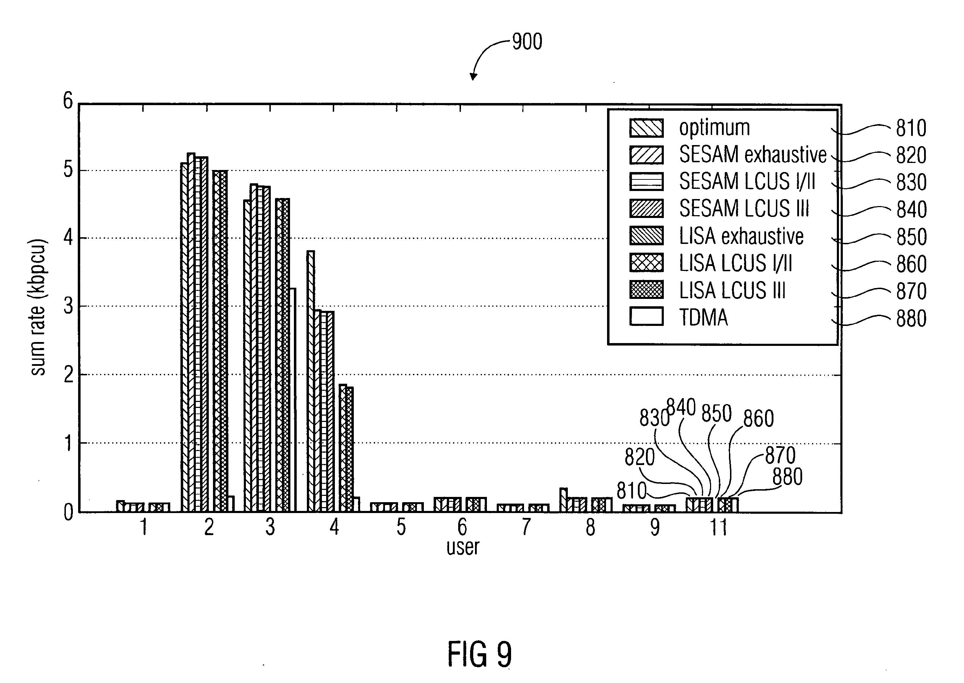

Figure 9 shows the users' individual rates 900 in the measured scenario for the sum rate maximization under minimum rate requirements with measured channels and K=10 users with $M_{Rx,k}$ = 2 antennas, $M_{Tx}$=4 transmit antennas, C=1024 subcarriers and B=100MHz, R1,min = R3,min = ..... = R9,min = 0.1024 kbitpcu and R2,min = R4,min = ..... = R8,min = R11,min = 0.2048 kbitpcu. With SESAM and LISA users 2, 3 and 4 experience a higher rate than their minimum rate requirement. The optimum solution additionally gives more resources to user 8 than required to satisfy its minimum rate requirement. With TDMA 880 however, only user 3 experiences a higher rate than its minimum requirement and even this rate is lower than the rate the same user achieves with LISA and LCUS III 870.

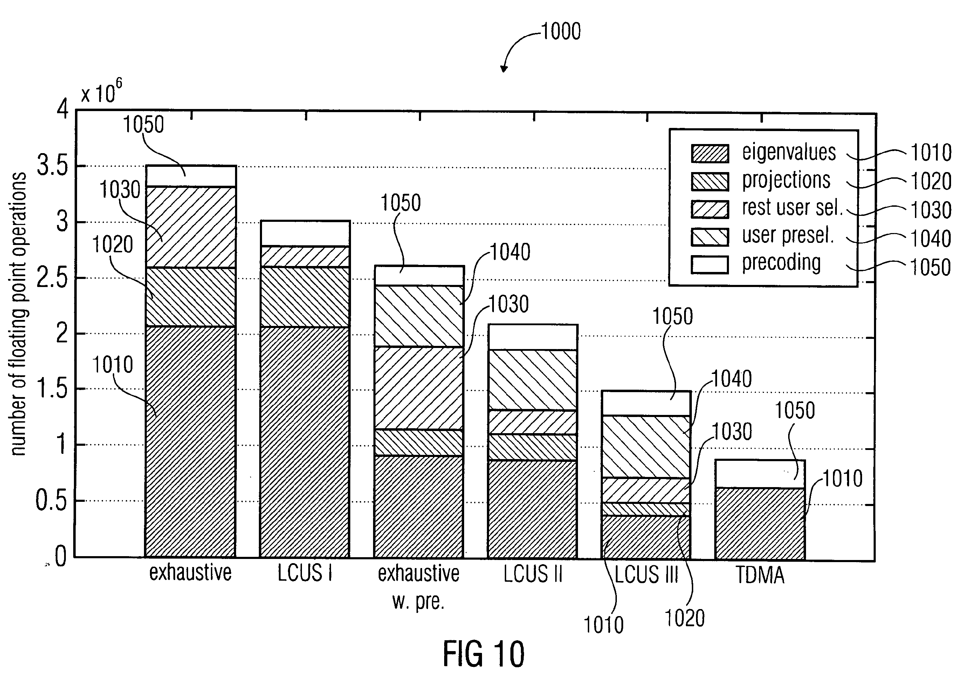

Figure 10 exhibits the computational complexity 1000 of the SESAM approaches in the above scenario for the sum rate maximization with SESAM under minimum rate requirements with measured channels and K=10 users with $M_{Rx,k}$ = 2 antennas, $M_{Tx}$=4 transmit antennas, C=1024 subcarriers and B=100MHz, R1,min = R3,min = ..... = R9,min = 0.1024 kbitpcu, R2,min = R4,min = ..... = R8,min = R11,min = 0.2048 kbitpcu and a SNR=20dB. The complexity is split up into the parts "Eigenvalues" 1010, "Projections" 1020, "Rest user sel" 1030, which contains the complexity of the user selection except the eigenvalues and the projections, the "User preselection" 1040, which contains the complexity required to compute the traces of the matrices, and the "Precoding" 1050. The exhaustive search exhibits the highest complexity. By applying the user preselection from equation (1.9) the complexity can be reduced by 25%, as plotted in the third bar in Figure 10. This is less as in the case of unconstrained sum rate maximization, as also weak users, which are excluded in the unconstrained sum rate maximization in most steps by the preselection, need to be considered more often, when QoS constraints are imposed. Note that the complexity of the preselection based algorithms depends on the channel matrices and the SNR, where in this case a SNR= 20dB is used for the simulations. LCUS I reduces the complexity of the rest of the user selection. This is due to the fact that the constrained power allocation may be conducted only for the selected user in each step, whereas with the exhaustive variant this power allocation may be computed K times in each step. By applying the user preselection complexity can be reduced by 31% compared to LCUS I at the same performance. Further reductions are possible with LCUS III at only marginal performance losses. While the complexity of LCUS III is less than twice the complexity of TDMA, sum rate is more than doubled compared to the latter.

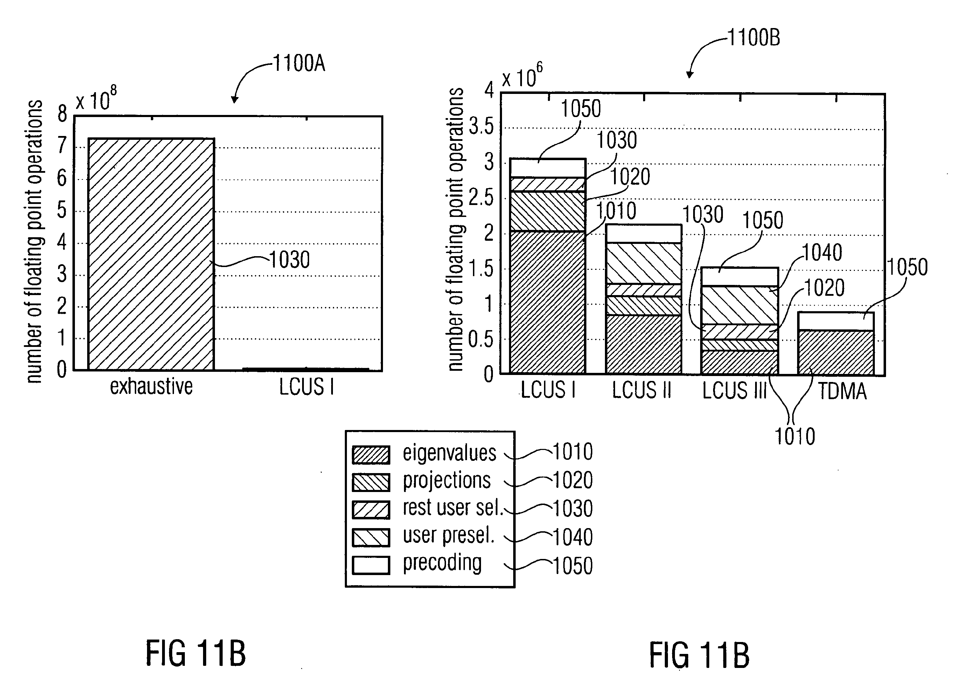

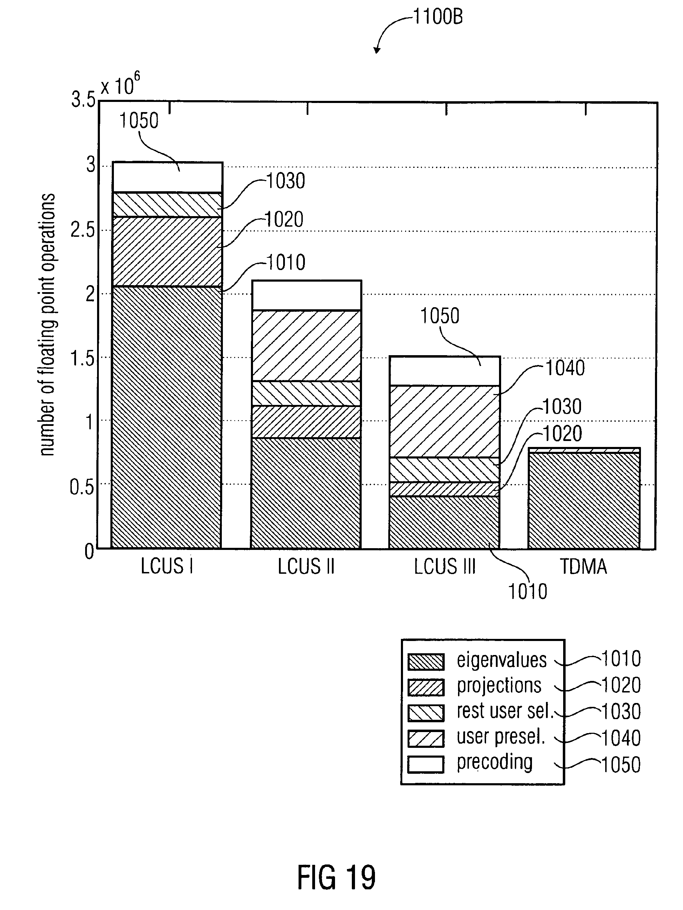

Figure 11a and 11b show the complexity 1100a, 1100b of the LISA variants for the sum rate maximization under minimum rate requirements with measured channels and K=10 users with $M_{Rx,k}$ = 2 antennas, $M_{Tx}$=4 transmit antennas, C=1024 subcarriers and B=100MHz, R1,min = R3,min = ..... = R9,min = 0.1024 kbitpcu, R2,min = R4,min = ..... = R8,min = R11,min = 0.2048 kbitpcu and a SNR=20dB. The complexity of the exhaustive search with LISA is plotted in Fig. 11a. The most complex part is the rest of the user selection, which contains the complexity of performing the power allocation $KM_{Tx}C^2$ times. This way the complexity is 240 times higher than the complexity of LISA LCUS I. The complexity reductions through the user preselection (LCUS II) and the user selection based on Frobenius norms (LCUS III) are in the same order as with SESAM. Fig. 19 shows the same results as Fig. 11b, only the scale of the Y-axis is slightly different.

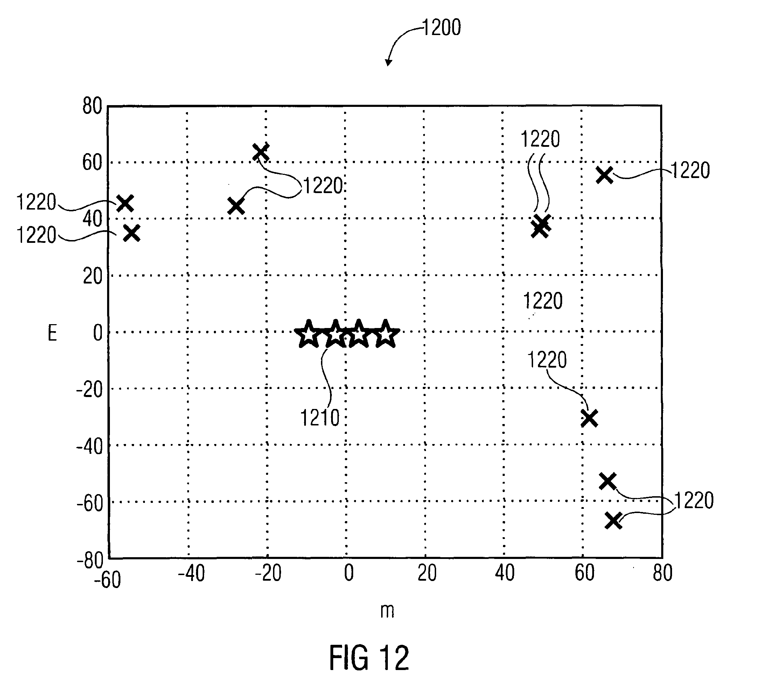

Some further embodiments according to the invention relate to simulation results with channels from 3GPP. For the following simulations the spatial MIMO channel models as proposed by the 3rd Generation Partnership Project (3GPP) in "Technical Specification Group Radio Access Network. Spatial Channel Model for Multiple-Input Multiple-Output (MIMO) Simulations. Technical report, 3rd Generation Partnership Project, 2007" is used. An Urban microcell environment with a base station with $M_{Tx}$ = 4 antennas is considered. The K = 10 users 1220 have been randomly placed in a 160 mx160 m scenario with a base station 1210 at the center leading to the scenario 1200 depicted in Figure 12. For the OFDM system the parameters specified by 3GPP in "Technical Specification Group Radio Access Network. Physical Layer Aspects for Evolved Universal Terrestrial Radio Access (UTRA). Technical report, 3rd Generation Partnership Project, 2006" is used. The setup with the lowest number of subcarriers is selected such that the search for the best user and carrier to be allocated next can also be conducted with LISA. The system bandwidth is equal to 1.25 MHz and the size of the Fast Fourier Transform (FFT) amounts to 128. C = 76 subcarriers are used for data transfer and the sampling frequency is equal to 1.92 MHz.

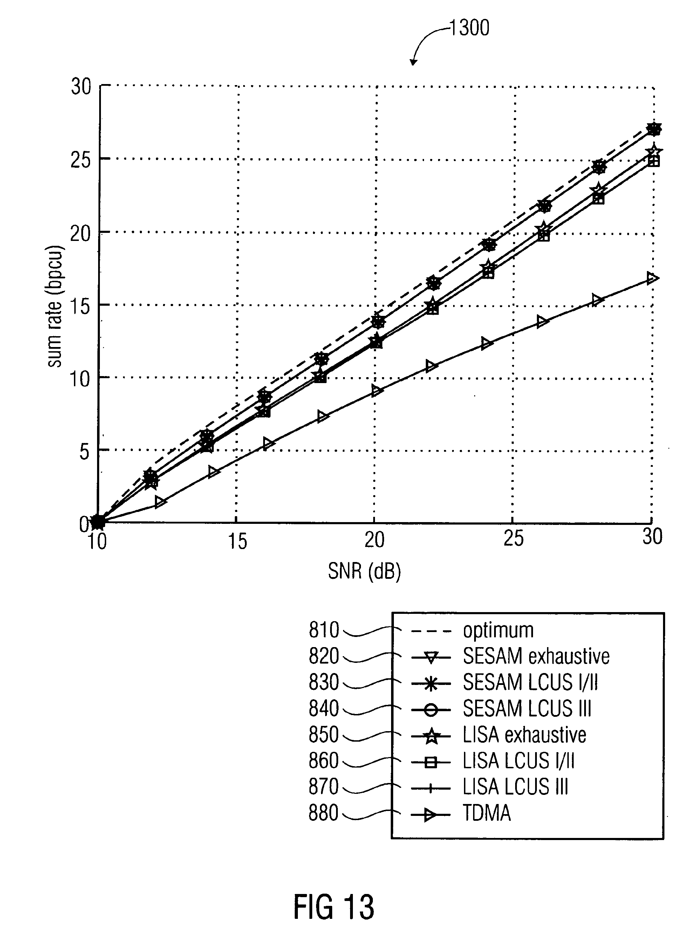

Figure 13 exhibits the sum rates 1300 over SNR achievable in the urban microcell scenario of Figure 12 for the sum rate maximization under minimum rate requirements with K=10 users with $M_{Rx,k}$ = 2 antennas, $M_{Tx}$=4 transmit antennas, C=76 active subcarriers and B=1.25MHz. The minimum rates have been set equal to 3bpcu for all users, i.e. R1,min = ... = R10,min = 3 bpcu. As with the measured channels the SESAM approaches perform close to optimum. Losses through applying linear precoding only are low. It can be also observed that LCUS I with LISA performs only slightly worse than the exhaustive search, where in each step each user and each carrier must be tested, although complexity is drastically reduced. TDMA is again clearly outperformed by all LISA and SESAM approaches.

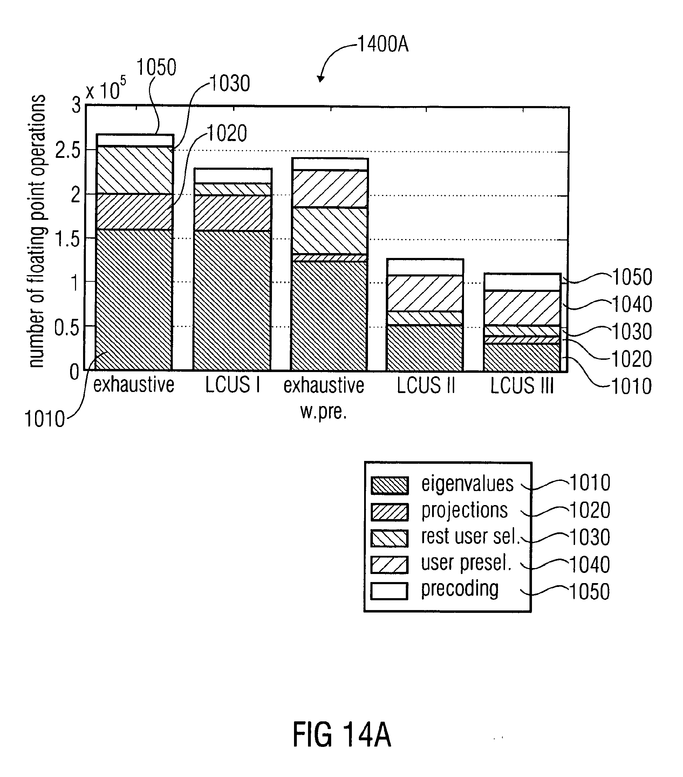

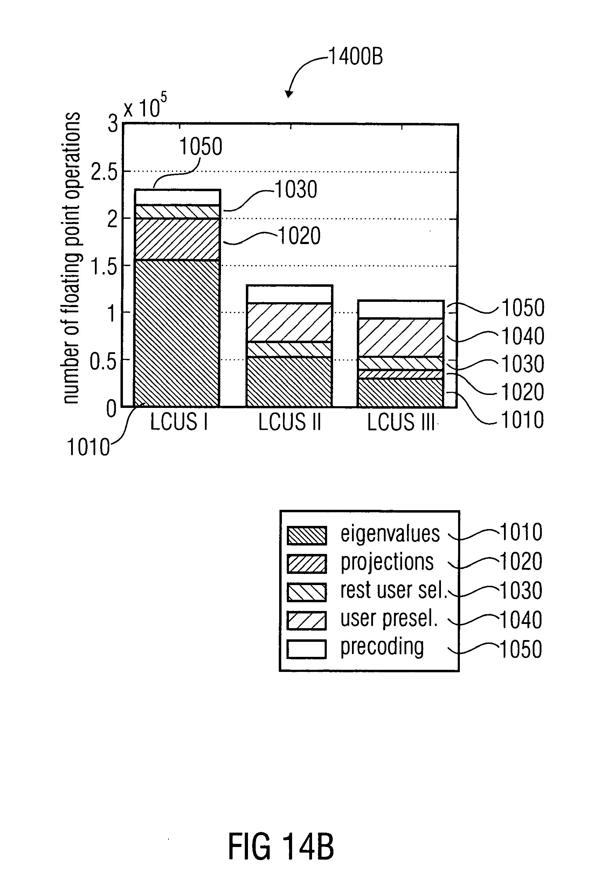

Figure 14a and 14b exhibit the computational complexity of the SESAM and LISA approaches in the scenario described above for the sum rate maximization under minimum rate requirements with K=10 users with $M_{Rx,k}$ = 2 antennas, $M_{Tx}$=4 transmit antennas, C=76 active subcarriers and B=1.25MHz. The minimum rates have been set equal to 3bpcu for all users, i.e. R1,min = ... = R10,min = 3 bpcu. While for SESAM the user preselection is not as effective as with the measured channels, interestingly it is more effective when the proposed low complexity user selection is considered. For SESAM as well as for LISA the computational complexity of LCUS II is only slightly above the complexity of LCUS III.

Some embodiments according to the invention relate to a low complexity successive user allocation in the MIMO OFDM broadcast channel on the Quality of Service aspects. In other words, Quality of Service (QoS)constrained problems in the Multiple-Input Multiple-Output (MIMO) Orthogonal Frequency Division Multiplexing (OFDM) broadcast channel are considered. Those problems are, for example, the maximization of sum rate under a power constraint and minimum and maximum rate requirements or relative rate requirements. Furthermore, the minimization of transmit power required to satisfy minimum rate requirements is considered. These problems may be solved via a successive allocation of data streams to users as with the Successive Encoding Seccessive Allocation Method (SESAM) or the LInear Successive Allocation (LISA) for the sum rate maximization with a power constraint only. The proposed methods may use, for example, the same receive and transmit filters as SESAM and LISA, but apply a different novel user allocation adjusted to the QoS constraints. Further complexity reductions can be achieved by using lower and upper bounds for principal eigenvalues. This way, the complexity of the presented algorithms is dramatically lower than the complexity of the optimum algorithms at only small performance losses. In other words, in order to avoid the efforts of known concepts, the optimum solution is aimed to be achieved as closely as possible in a non-iterative (which means an already selected terminal remains selected), but much more computationally efficient manner.

Some further embodiments according to the invention relate to the successive allocation of data streams to users and the determination of the corresponding receive filters known from SESAM and LISA to QoS orientated optimization problems in the MIMO OFDM broadcast channel. A straight forward approach may be to allocate the data streams to users such that in each step the improvement in the objective function becomes maximum. However, this method exhibits still a considerable amount of computational complexity. For the purely linear case it may become even infeasible already with a moderate number of subcarriers. The current invention may provide a low complexity user selection rule for the successive allocation of data streams to users with QoS constrained optimization problems. It can be applied to any concave optimization problem, i.e. is not limited to the applications listed above. For the sum rate maximization with SESAM or LISA, the allocation of data streams to users is done via selecting the user whose channel matrix projected into the nullspace of previously determined transmit beamformers exhibits the strongest principal singular value. Based on the described concept the singular values of projected channel matrices may be modified according to the QoS constraints and the previous allocations and the user to which the next data stream is allocated to may be selected based on these modifications. It can be applied to any concave optimization problem. By applying upper and lower bounds for the principal eigenvalue of a matrix further complexity reductions can be achieved, as explicit computations of principal singular values, which are computationally expensive, can be avoided. Additional reductions in computational complexity can be achieved by performing the user selection solely based on an upper bound for the principal eigenvalue at marginal further performance losses.

Therefore the method provides a low complexity user selection for QoS constrained optimization problems. With the concept no iterative application may be necessary. Further, the described concept may be applicable to any concave optimization problem.

Some embodiments according to the invention relate to a low complexity user selection (LCUS). For this, a greedy approach is used and the receive entrance transmit filters are determined by SESAM or LISA. The carriers and users for the next data stream are selected based on a simple criterion (LCUSI). For this, approximations like equal power loading, Lagrangian multipliers from the last step and a consideration of the newly allocated subchannels only may be done. In this way, a simplified objective function with less parameters to be optimized and less dependencies between parameters may be obtained. No exhaustive search over all carriers may be required. A computationally inexpensive testing only over all users can be realized. Further complexity reductions through a carrier and user preselection at no performance losses (LCUSII) or an approximation of the original selection criterion with upper bounds on the eigenvalues (LCUSIII) may be done.

In this way a low computational complexity can be realized due to no need for exhaustive testing and/or using no iterative method. In comparison, note that exhaustive search, for example for linear transmit processing (like in 3GPP LTE, 3$^{rd}$ generation partnership project long term evolution) is not tractable.

However, the performance of the described concept is close to the optimum performance. The general concept is applicable to a wide range of optimization problems with Quality of Service constraints. The described user allocation method may be used for linear and non-linear precoding.

In other words, a low complexity algorithm for a Quality of Service constraint optimization problems in the MIMO broadcast channel is described. For example, SESAM or LISA is used for determining the transmit or receive filters, but a different user and power allocation is performed. This may be done by the novel simple user allocation method described above. In this way, the performance is close to the optimum at drastically reduced complexity.

In general, instead of finding, calculating or determining a maximum, a minimum or an optimum during a step of the described concept, also calculating a nearly maximal, nearly minimal or nearly optimal solution may be sufficient. For example, a terminal providing a weighted transmission rate better than 80% of the other selectable terminals or providing the three best weighted transmission rates or even the best weighted transmission rate may be selected or the weighted transmission rate may be calculated only for the half, two third or 80% of the selectable terminals and the best of them is selected.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Apparatus (100; 200) for selecting a terminal from a plurality of selectable terminals in a Multiple-Input Multiple-Output communication system for transmitting data from a base station to the terminal, the apparatus comprising:

    a calculator (110) configured to calculate a MIMO-subchannel gain parameter for each terminal of the plurality of selectable terminals and configured to calculate a weighted transmission rate (112) based on a calculated MIMO-subchannel gain parameter, on a power parameter and on a weighting multiplier, wherein the weighting multiplier depends on a Quality of Service constraint of the Multiple-Input Multiple-Output communication system; and
    a selector (120) configured to select the terminal based on the calculated weighted transmission rate.

2. Apparatus according to claim 1, wherein the weighting multiplier further depends on a main constraint of a plurality of already-selected terminals of the Multiple-Input Multiple-Output communication system.

3. Apparatus according to claim 2, wherein the main constraint is selecting a terminal of the plurality of selectable terminals providing a highest sum rate in combination with the plurality of already-selected terminals and the Quality of Service constraint is selecting a terminal fulfilling a predefined terminal rate ratio compared to a reference terminal, or wherein the main constraint is selecting a terminal of the plurality of selectable terminals providing a highest sum rate in combination with the plurality of already-selected terminals and the Quality of Service constraint is selecting a terminal fulfilling a predefined minimum terminal rate or fulfilling a predefined maximum terminal rate, or wherein the main constraint is selecting a terminal of the plurality of selectable terminals providing a lowest sum power consumption in combination with the plurality of already-selected terminals and the Quality of Service constraint is selecting a terminal fulfilling a predefined minimum terminal rate.

4. Apparatus according to one of the claims 1 to 3, wherein the calculator (110) is configured to determine a preferred subchannel for each terminal of the plurality of selectable terminals, wherein the apparatus is configured to allocate the preferred subchannel determined for the selected terminal to the selected terminal.

5. Apparatus according to one of the claims 1 to 4, wherein the apparatus is configured to successively select a plurality of terminals from the plurality of selectable terminals for a time interval, wherein an already-selected terminal remains selected during the time interval.

6. Apparatus according to one of the claims 1 to 5, wherein the apparatus is configured to select a plurality of terminals from the plurality of selectable terminals, wherein the weighting multiplier depends on a predetermined Lagrange multiplier, wherein the predetermined Lagrange multiplier depends on the Quality of Service constraint or the main constraint, wherein the calculator is configured to predetermine the Lagrange multiplier after a selection of a last terminal of the already-selected terminals.

7. Apparatus according to one of the claims 1 to 6, wherein the apparatus is configured to select a plurality of terminals from the plurality of selectable terminals and configured to allocate a subchannel to each selected terminal of the plurality of selected terminals, wherein the weighted transmission rate (112) depends on the already-selected terminals, and wherein the power parameter is equal for each subchannel allocated to an already-selected terminal.

8. Apparatus according to claim 7, wherein the power parameter of a subchannel allocated to an already-selected terminal is independent of the terminal to be selected during the calculation of the MIMO-subchannel gain parameter, the calculation of the weighted transmission rate and the selection of the terminal.

9. Apparatus according to one of the claims 1 to 8, wherein the calculator (110) is configured to calculate the weighted transmission rate (112) for each terminal of the plurality of selectable terminals, wherein the weighted transmission rate (112) of a terminal is based on the corresponding MIMO-subchannel gain parameter calculated for this terminal.

10. Apparatus according to one of the claims 1 to 9, wherein the apparatus is configured to select a plurality of terminals from the plurality of selectable terminals and the apparatus comprising a terminal preselector (212), wherein the terminal preselector (212) is configured to preselect the plurality of selectable terminals from a main plurality of terminals, wherein a terminal of the main plurality of terminals, is preselected if an upper bound of a maximum subchannel rate of the terminal to be preselected is equal or higher than a maximum lower bound of a transmission rate of the main plurality of terminals.

**11.** Apparatus according to one of the claims 1 to 10, wherein the apparatus is configured to select a plurality of terminals from the plurality of selectable terminals and the apparatus comprising a carrier preselector (214) configured to preselect a plurality of carriers from a main plurality of carriers for a terminal of the plurality of selectable terminals, wherein a carrier of the main plurality of carriers is preselected if an upper bound of a subchannel gain of the carrier to be preselected is equal or larger than a maximum lower bound of a subchannel gain of the main plurality of carriers.

**12.** Apparatus according to one of the claims 1 to 11, wherein the calculator (110) is configured to calculate the MIMO-subchannel gain parameter for each terminal of the plurality of selectable terminals based on an upper bound or a lower bound of a MIMO-subchannel gain of each terminal.

**13.** Method (300) for selecting a terminal from a plurality of selectable terminals in a Multiple-Input Multiple-Output communication system for transmitting data from a base station to the terminal, the method comprising:

calculating (310) a MIMO-subchannel gain parameter for each terminal of the plurality of selectable terminals;
calculating (320) a weighted transmission rate based on a calculated MIMO-subchannel gain parameter, on a power parameter and on a weighting multiplier, wherein the weighting multiplier depends on a Quality of Service constraint of the Multiple-Input Multiple-Output communication system; and
selecting (330) the terminal based on the calculated weighted transmission rate.

**14.** Apparatus (400) for allocating a plurality of subchannels to a plurality of terminals to be simultaneously addressed by a base station in a Multiple-Input Multiple-Output communication system for transmitting data from the base station to the plurality of terminals to be simultaneously addressed, the apparatus comprising:

an apparatus for selecting a terminal from a plurality of selectable terminals according to one of the claims 1 to 12, wherein the plurality of selectable terminals comprises at least two of the terminals of the plurality of terminals to be simultaneously addressed; and
a channel allocator (410) configured to allocate at least one subchannel to each terminal of the plurality of terminals to be simultaneously addressed and configured to allocate a further subchannel to one of the terminals of the plurality of selectable terminals selected by the apparatus for selecting a terminal, if a main constraint and the Quality of Service constraint is fulfilled.

**15.** Method (500) for allocating a plurality of subchannels to a plurality of terminals to be simultaneously addressed by a base station in a Multiple-Input Multiple-Output communication system for transmitting data from the base station to the plurality of terminals to be simultaneously addressed, the apparatus comprising:

allocating (510) at least one subchannel to each terminal of the plurality of terminals to be simultaneously addressed;
selecting (520) a terminal of a plurality of selectable terminals according to the method for selecting a terminal according to claim 13, wherein the plurality of selectable terminals comprises at least two of the terminals of the plurality of terminals to be simultaneously addressed, and wherein selecting a terminal comprises determining a preferred subchannel for each terminal of the plurality of selectable terminals; and
allocating (530) the preferred subchannel of the selected terminal to the selected terminal, if a main constraint and the Quality of Service constraint is fulfilled.

**16.** Computer program with a program code for performing the method according to claims 13 or 15, when the computer program runs on a computer or a microcontroller.

**Amended claims in accordance with Rule 137(2) EPC.**

**1.** Apparatus (100; 200) for selecting a terminal from a plurality of selectable terminals in a Multiple-Input Multiple-Output communication system for transmitting data from a base station to the terminal, the apparatus comprising:

a calculator (110) configured to calculate a MIMO-subchannel gain parameter for each terminal of the plurality of selectable terminals and configured to calculate a weighted transmission rate (112) based on a calculated MIMO-subchannel gain parameter, on a power parameter and on a weighting multiplier, wherein the weighting multiplier depends on a Quality of Service constraint of the Multiple-Input Multiple-Output communication system, wherein the weighting multiplier depends on a predetermined Lagrange multiplier, wherein the predetermined Lagrange multiplier depends on the Quality of Service constraint or a main constraint; and
a selector (120) configured to select the terminal based on the calculated weighted transmission rate.

**2.** Apparatus according to claim 1, wherein the weighting multiplier further depends on a main constraint of a plurality of already-selected terminals of the Multiple-Input Multiple-Output communication system.

**3.** Apparatus according to claim 2, wherein the main constraint is selecting a terminal of the plurality of selectable terminals providing a highest sum rate in combination with the plurality of already-selected terminals and the Quality of Service constraint is selecting a terminal fulfilling a predefined terminal rate ratio compared to a reference terminal, or wherein the main constraint is selecting a terminal of the plurality of selectable terminals providing a highest sum rate in combination with the plurality of already-selected terminals and the Quality of Service constraint is selecting a terminal fulfilling a predefined minimum terminal rate or fulfilling a predefined maximum terminal rate, or wherein the main constraint is selecting a terminal of the plurality of selectable terminals providing a lowest sum power consumption in combination with the plurality of already-selected terminals and the Quality of Service constraint is selecting a terminal fulfilling a predefined minimum terminal rate.

**4.** Apparatus according to one of the claims 1 to 3, wherein the calculator (110) is configured to determine a preferred subchannel for each terminal of the plurality of selectable terminals, wherein the apparatus is configured to allocate the preferred subchannel determined for the selected terminal to the selected terminal.

**5.** Apparatus according to one of the claims 1 to 4, wherein the apparatus is configured to successively select a plurality of terminals from the plurality of selectable terminals for a time interval, wherein an already-selected terminal remains selected during the time interval.

**6.** Apparatus according to one of the claims 1 to 5, wherein the apparatus is configured to select a plurality of terminals from the plurality of selectable terminals, wherein the weighting multiplier depends on a predetermined Lagrange multiplier, wherein the predetermined Lagrange multiplier depends on the Quality of Service constraint or the main constraint, wherein the calculator is configured to predetermine the Lagrange multiplier after a selection of a last terminal of the already-selected terminals.

**7.** Apparatus according to one of the claims 1 to 6, wherein the apparatus is configured to select a plurality of terminals from the plurality of selectable terminals and configured to allocate a subchannel to each selected terminal of the plurality of selected terminals, wherein the weighted transmission rate (112) depends on the already-selected terminals, and wherein the power parameter is equal for each subchannel allocated to an already-selected terminal.

**8.** Apparatus according to claim 7, wherein the power parameter of a subchannel allocated to an already-selected terminal is independent of the terminal to be selected during the calculation of the MIMO-subchannel gain parameter, the calculation of the weighted transmission rate and the selection of the terminal.

**9.** Apparatus according to one of the claims 1 to 8, wherein the calculator (110) is configured to calculate the weighted transmission rate (112) for each terminal of the plurality of selectable terminals, wherein the weighted transmission rate (112) of a terminal is based on the corresponding MIMO-subchannel gain parameter calculated for this terminal.

**10.** Apparatus according to one of the claims 1 to 9, wherein the apparatus is configured to select a plurality of terminals from the plurality of selectable terminals and the apparatus comprising a terminal preselector (212), wherein the terminal preselector (212) is configured to preselect the plurality of selectable terminals from a main plurality of terminals, wherein a terminal of the main plurality of terminals is preselected if an upper bound of a maximum subchannel rate of the terminal to be preselected is equal or higher than a maximum lower bound of a transmission rate of the main plurality of terminals.

**11.** Apparatus according to one of the claims 1 to 10, wherein the apparatus is configured to select a plurality of terminals from the plurality of selectable terminals and the apparatus comprising a carrier preselector (214) configured to preselect a plurality of carriers from a main plurality of carriers for a terminal of the plurality of selectable terminals, wherein a carrier of the main plurality of carriers is preselected if an upper bound of a subchannel gain of the carrier to be preselected is equal or larger than a maximum lower bound of a subchannel gain of the main plurality of carriers.

**12.** Apparatus according to one of the claims 1 to 11, wherein the calculator (110) is configured to calculate the MIMO-subchannel gain parameter for each terminal of the plurality of selectable terminals based on an upper bound or a lower bound of a MIMO-subchannel gain of each terminal.

**13.** Method (300) for selecting a terminal from a plurality of selectable terminals in a Multiple-Input Multiple-Output communication system for transmitting data from a base station to the terminal, the method comprising:

calculating (310) a MIMO-subchannel gain parameter for each terminal of the plurality of selectable terminals;
calculating (320) a weighted transmission rate based on a calculated MIMO-subchannel gain parameter, on a power parameter and on a weighting multiplier, wherein the weighting multiplier depends on a Quality of Service constraint of the Multiple-Input Multiple-Output communication system,
wherein the weighting multiplier depends on a predetermined Lagrange multiplier, wherein the predetermined Lagrange multiplier depends on the Quality of Service constraint or a main constraint; and
selecting (330) the terminal based on the calculated weighted transmission rate.

**14.** Apparatus (400) for allocating a plurality of subchannels to a plurality of terminals to be simultaneously addressed by a base station in a Multiple-Input Multiple-Output communication system for transmitting data from the base station to the plurality of terminals to be simultaneously addressed, the apparatus comprising:

an apparatus for selecting a terminal from a plurality of selectable terminals according to one of the claims 1 to 12, wherein the plurality of selectable terminals comprises at least two of the terminals of the plurality of terminals to be simultaneously addressed; and
a channel allocator (410) configured to allocate at least one subchannel to each terminal of the plurality of terminals to be simultaneously addressed and configured to allocate a further subchannel to one of the terminals of the plurality of selectable terminals selected by the apparatus for selecting a terminal, if a main constraint and the Quality of Service constraint is fulfilled.

**15.** Method (500) for allocating a plurality of subchannels to a plurality of terminals to be simultaneously addressed by a base station in a Multiple-Input Multiple-Output communication system for transmitting data from the base station to the plurality of terminals to be simultaneously addressed, the apparatus comprising:

allocating (510) at least one subchannel to each terminal of the plurality of terminals to be simultaneously addressed;
selecting (520) a terminal of a plurality of selectable terminals according to the method for selecting a terminal according to claim 13, wherein the plurality of selectable terminals comprises at least two of the terminals of the plurality of terminals to be simultaneously addressed, and wherein selecting a terminal comprises determining a preferred subchannel for each terminal of the plurality of selectable terminals; and
allocating (530) the preferred subchannel of the selected terminal to the selected terminal, if a main constraint and the Quality of Service constraint is fulfilled.

**16.** Computer program with a program code for performing the method according to claims 13 or 15, when the computer program runs on a computer or a microcontroller.

100

calculator ⌒110

⌒112

selector ⌒120

# FIG 1

200

110

terminal
preselector — 212

calculator

carrier
preselector — 214

112

210

selector — 120

FIG 2

—300

Calculating a MIMO-subchannel gain parameter for each terminal of the plurality of selectable terminals. —310

Calculating a weighted transmission rate based on a calculated MIMO-subchannel gain parameter, on a power parameter and on a weighted multiplier, wherein the weighting multiplier depends on a Quality of Service constraint of the Multiple-Input Multiple-Ouput communication system. —320

Selecting the terminal based on the calculated weighted transmission rate. —330

# FIG 3

400

410

channel
allocator

calculator ~110

112

selector ~120

100

FIG 4

500

Allocating successively one subchannel to each terminal of the plurality of terminals to be simultaneously addressed.

510

Selecting a terminal of plurality of selectable terminals according to the method for selecting, a terminal, wherein the plurality of selectable terminals comprises at least two of the terminals of the plurality of terminals to be simultaneously addressed, and wherein selecting a terminal comprises determining a preferred subchannel for each terminal of the plurality of selectable terminals.

520

Allocating the preferred subchannel of the selected terminal to the selected terminal, if a main constraint and the Quality of Service constraint is fulfilled.

530

# FIG 5

FIG 6

700

$S_{1,c}$ →▷—$\sqrt{\gamma_{1,c}}$—▷—$\lambda_{1,c}$—⊕→ $\hat{S}_{1,c}$

$\eta'_{1,c}$

$S_{i,c}$ →▷—$\sqrt{\gamma_{i,c}}$—▷—$\lambda_{i,c}$—⊕→ $\hat{S}_{i,c}$

$\eta'_{i,c}$

$S_{N_C,c}$ →▷—$\sqrt{\gamma_{N_C,c}}$—▷—$\lambda_{N_C,c}$—⊕→ $\hat{S}_{N_C,c}$

$\eta'_{N_C,c}$

# FIG 7

FIG 8

EP 2 273 839 A1

FIG 9

FIG 10

EP 2 273 839 A1

FIG 11B

FIG 11B

FIG 12

EP 2 273 839 A1

FIG 13

FIG 14A

FIG 14B

FIG 15

EP 2 273 839 A1

FIG 16

1700

space

1720

1710

1720

1710

carrier

FIG 17

FIG 18

FIG 19

EP 2 273 839 A1

Europäisches
Patentamt
European
Patent Office
Office européen
des brevets

# EUROPEAN SEARCH REPORT

Application Number

EP 09 00 8570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/260051 A1 (BOCCARDI FEDERICO [GB] ET AL) 23 October 2008 (2008-10-23) * abstract; figures 1,2,3 * * paragraph [0004] - paragraph [0007] * * paragraph [0034] - paragraph [0041] * * paragraph [0047] - paragraph [0051] * * paragraph [0064] - paragraph [0069] * ----- | 1-16 | INV. H04W72/14 H04B7/04 H04L5/00 |
| X | ERMANNA CONTE ET AL: "Scheduling strategies for multiuser MIMO OFDM systems with limited feedback" PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371521 ISBN: 978-1-4244-2643-0 * the whole document * ----- | 1-16 | |
| X | KIANI S ET AL: "Distributed power allocation for interfering wireless links based on channel information partitioning" IEEE TRANSACTIONS ON WIRELESS COMMUNICATIONS, IEEE SERVICE CENTER, PISCATAWAY, NJ, US, vol. 8, no. 6, 1 June 2009 (2009-06-01), pages 3004-3015, XP011269744 ISSN: 1536-1276 * Sections I and III. * ----- -/-- | 1,13,16 | TECHNICAL FIELDS SEARCHED (IPC) H04W H04B H04L |

The present search report has been drawn up for all claims

| Place of search | Date of completion of the search | Examiner |
|---|---|---|
| Munich | 4 March 2010 | Martínez Martínez, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

52

Europäisches
Patentamt

European
Patent Office

Office européen
des brevets

# EUROPEAN SEARCH REPORT

Application Number

EP 09 00 8570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUTHY C ET AL: "A User Grouping Method for Maximum Weighted Sum Capacity Gain" COMMUNICATIONS, 2009. ICC '09. IEEE INTERNATIONAL CONFERENCE ON, IEEE, PISCATAWAY, NJ, USA, 14 June 2009 (2009-06-14), pages 1-5, XP031505661 ISBN: 978-1-4244-3435-0 * section III * | 1,13,16 | |
| A,D | TEJERA P ET AL: "Rate Balancing in Multiuser MIMO OFDM Systems" IEEE TRANSACTIONS ON COMMUNICATIONS, IEEE SERVICE CENTER, PISCATAWAY, NJ, US, vol. 57, no. 5, 1 May 2009 (2009-05-01), pages 1370-1380, XP011257670 ISSN: 0090-6778 * the whole document * | 1-16 | |

TECHNICAL FIELDS
SEARCHED     (IPC)

The present search report has been drawn up for all claims

| Place of search | Date of completion of the search | Examiner |
|---|---|---|
| Munich | 4 March 2010 | Martínez Martínez, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 00 8570

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2010

| Patent document cited in search report | Publication date | Patent family member(s) | Publication date |
|---|---|---|---|
| US 2008260051 A1 | 23-10-2008 | EP 2149203 A1<br>WO 2008133844 A1 | 03-02-2010<br>06-11-2008 |

EPO FORM P0459

For more details about this annex : see Official Journal of the European Patent Office, No. 12/82

EP 2 273 839 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. Fung ; W. Yu ; T. Lim.** Multiantenna Downlink Precoding with Individual Rate Constraints: Power Minimization and User Ordering. *International Conference on Communication systems,* 2004
- **J. Lee ; N. Jindal.** Symmetric Capacity of MIMO Downlink Channels. *IEEE International Symposium on Information Theory,* 2006
- **G. Wunder ; T. Michel.** Minimum Rates Scheduling for MIMO-OFDM Broadcast Channels. *Proc. 9th IEEE Intern. Symp. on Spread Spectrum Techniques and Applications,* August 2006
- **H. Viswanathan ; S. Venkatesan ; H. Huang.** Downlink Capacity Evaluation of Cellular Networks With Known-Interference Cancellation. *IEEE Journal on Selected Areas in Communications,* June 2003, vol. 21 (6), 802-811
- **P. Tejera ; W. Utschick ; G. Bauch ; J. A. Nossek.** Subchannel Allocation in Multiuser Multiple-Input Multiple-Output Systems. *IEEE Transactions on Information Theory,* October 2006, vol. 52, 4721-4733
- **C. Guthy ; W. Utschick ; J. A. Nossek ; G. Dietl ; G. Bauch.** Rate-Invariant User Preselection for Complexity Reduction in Multiuser MIMO Systems. *Proc. of IEEE Vehicular Technology Conference,* September 2008
- **P. Tejera ; W. Utschick ; G. Bauch ; J.A. Nossek.** Rate Balancing in Multiuser MIMO OFDM Systems. *IEEE Transactions on Communications,* 2009
- **C. Guthy ; W. Utschick ; G. Bauch ; J.A. Nossek.** Sum Throughput Enhancements in Quality of Service Constrained Multiuser MIMO OFDM Systems. *Wireless Personal Communications journal, special issue on "Serving and Managing Users in a Heterogeneous B3G Wireless World: Requirements, New Research Challenges, Emerging Solutions",* 2009, vol. 48 (1), 157-173
- **C. Guthy ; W. Utschick ; G. Dietl ; P. Tejera.** Efficient Linear Successive Allocation for the MIMO Broadcast Channel. *Proc. of 42 and Asilomar Conference on Signals, Systems, and Computers,* October 2008
- **G. H. Golub ; C. F. van Loan.** Matrix Computations. John Hopkins University Press, 1989
- **C. Guthy ; W. Utschick ; G. Dietl ; P. Tejera.** Efficient Linear Successive Allocation for the MIMO Broadcast Channel. *Proc. of 42 nd Asilomar Conference on Signals, Systems" and "Computers,* October 2008
- **G. Dimi'c ; N.D. Sidoropoulos.** On Downlink Beamforming with Greedy User Selection. *IEEE Transactions on Signal Processing,* October 2005, vol. 53 (10), 3857-3868
- **M. Codreanu ; A. Tölli ; M. Juntti ; M. Latvaaho.** Joint Design of Tx-Rx Beamformers in MIMO Downlink Channel. *IEEE Transactions on Signal Processing,* 2007, vol. 55, 4639-4655
- **S. Boyd ; L. Vandenberghe.** Convex optimization. Cambridge University Press, 2008
- **S. Boyd ; L. Vandenberghe.** Convex Optimization. Cambridge University Press, 2008
- **C. Guthy ; W. Utschick ; J. A. Nossek ; G. Dietl ; G. Bauch.** Rate-Invariant User Preselection for Complexity Reduction in Multiuser MIMO Systems. *Proc. Of IEEE Vehicular Technology Conference,* September 2008
- **Gene H. Golub ; Charles F. van Loan.** Matrix Computations. John Hopkins University Press, 1989
- **G. Bauch ; J. Bach Andersen ; C. Guthy ; M. Herdin ; J. Nielsen ; P. Tejera ; W. Utschick ; J.A. Nossek.** Multiuser MIMO Channel Measurements and Performance in a Large Office Environment. *Proc. of IEEE Wireless Communications and Networking Conference,* 2007